# EUROPEAN PATENT APPLICATION

(11) **EP 4 534 573 A1**
(43) Date of publication of application: **09.04.2025**
(21) Application number: 23815813.3
(22) Date of filing: 18.05.2023
(51) Int. Cl.: C08F 297/04, C09J 11/06, C09J 11/08, C08L 53/02, C09J 153/02

(54) **ADHESIVE AGENT COMPOSITION, HOT-MELT ADHESIVE AGENT COMPOSITION, AND ADHESIVE AGENT**

(30) Priority: 30.05.2022 JP 2022087918
(71) Applicant: Zeon Corporation, Tokyo 100-8246 (JP)
(72) Inventor: NOZAWA, Atsushi, Tokyo 100-8246 (JP)
(74) Representative: Kraus & Lederer PartGmbB
(86) International application number: PCT/JP2023/018603
(87) International publication number: WO 2023/234054

(57) **Abstract**

Provided is an adhesive composition comprising a block copolymer composition and an alkyl radical scavenger, the block copolymer composition containing a specific block copolymer A1 represented by General Formula (1) or a specific block copolymer A2 represented by General Formula (2), wherein the entire block copolymer composition has a weight average molecular weight (Mw) of 300,000 to 800,000, and the content of the alkyl radical scavenger is 0.05 to 2 parts by mass relative to 100 parts by mass of the content of the block copolymer composition.

## Description

### TECHNICAL FIELD

The present invention relates to an adhesive composition, and a hot-melt adhesive composition and an adhesive prepared using the adhesive composition.

### BACKGROUND ART

Hot-melt adhesives are adhesives which can efficiently bond a variety of products because when cooled from a heat melted state, these solidify in a short time, and have high safety to human bodies because they are solvent-free. For these reasons, the hot-melt adhesives have been used in a variety of fields. For example, such hot-melt adhesives are used as adhesives for sealing paper, corrugated cardboards, and films for packaging of food products, cloths, electronic devices, cosmetics, and the like, adhesives for bonding constitutional members for production of sanitary goods such as disposable diapers and feminine hygiene products, and adhesives forming adhesive layers of adhesive tapes and labels.

A variety of thermoplastic resins are used as a base polymer for constituting a hot-melt adhesive, and for example, use of aromatic-conjugated diene copolymers such as styrene-isoprene block copolymers and styrene-butadiene block copolymers is known.

For example, Patent Document 1 discloses a composition comprising a block copolymer containing an aromatic vinyl monomer unit, an antioxidant (I), an antioxidant (II), and an antioxidant (III) which is an optional component, wherein the antioxidant (I) is a compound containing a hindered phenol structure in which the two ortho-positions of the hydroxyl group bonded to the benzene ring are substituted by a t-butyl group, the antioxidant (II) is a compound containing a sulfur atom in the molecule (excluding the antioxidant (I)), the antioxidant (III) is a polymer alkyl radical scavenger, the content of the antioxidant (I) is within the range of 0.05 to 1.00 part by mass relative to 100 parts by mass of the block copolymer, the content of the antioxidant (II) is within the range of 0.10 to 1.00 part by mass relative to 100 parts by mass of the block copolymer, the total content of the antioxidant (I), the antioxidant (II), and the antioxidant (III) is within the range of 0.15 to 1.50 parts by mass relative to 100 parts by mass of the block copolymer, and the content of a conjugated diene dimer in the composition is 10 ppm by weight or less relative to the composition.

### RELATED ART DOCUMENTS

### PATENT DOCUMENTS

Patent Document 1: JP 2020-117663 A

### SUMMARY OF THE INVENTION

### PROBLEM TO BE SOLVED BY THE INVENTION

Recently, a further improvement in adhesive properties has been demanded, and thus a technique that can improve adhesive properties more significantly than those in Patent Document 1 has been demanded.

The present invention has been made in consideration of such circumstances. An object of the present invention is to provide an adhesive composition which has excellent processability and can provide an adhesive having excellent adhesive properties.

### MEANS FOR SOLVING PROBLEMS

The present inventor, who has conducted extensive research to solve the above problem, has found that the above problem can be solved by an adhesive composition comprising a block copolymer composition containing a specific block copolymer A1 or a specific block copolymer A2 where the entire block copolymer composition has a weight average molecular weight (Mw) of 300,000 to 800,000, and a specific amount of an alkyl radical scavenger. This has led to completion of the present invention.

Specifically, the present invention provides the following adhesive composition.
[1] An adhesive composition comprising a block copolymer composition and an alkyl radical scavenger, the block copolymer composition containing a block copolymer A1 represented by General Formula (1) below or a block copolymer A2 represented by General Formula (2) below,
   wherein the entire block copolymer composition has a weight average molecular weight (Mw) of 300,000 to 800,000, and
   the content of the alkyl radical scavenger is 0.05 to 2 parts by mass relative to 100 parts by mass of the content of the block copolymer composition:

      (Ar¹-D¹)ₘX¹(D²)ₙ (1)

      where in General Formula (1), Ar¹ represents an aromatic monovinyl polymer block, D¹ and D² each represent a conjugated diene polymer block, m is an integer of 1 or more, n is an integer of 1 or more, m+n is an integer of 3 or more, and X¹ represents a residue of a polyfunctional coupling agent;

      (Ar-D)ₚX (2)

      where in General Formula (2), Ar represents an aromatic monovinyl polymer block, D represents a conjugated diene polymer block, p is an integer of 3 or more, and X represents a residue of a polyfunctional coupling agent.
[2] The adhesive composition according to [1], wherein the block copolymer A1 or the block copolymer A2 has a molecular weight distribution (Mw/Mn) of 1.40 or less, and
   the total content of the block copolymer A1 and the block copolymer A2 in the block copolymer composition is 10% by mass or more.
[3] The adhesive composition according to [1] or [2], wherein the block copolymer composition further contains a diblock copolymer B represented by General Formula (3) below or a polymer C represented by General Formula (4) below,
   the diblock copolymer B or the polymer C has a molecular weight distribution (Mw/Mn) of 1.20 or less,
   the total content of the diblock copolymer B and the polymer C in the block copolymer composition is 60% by mass or less,
   the content of aromatic monovinyl monomer units in the block copolymer composition is 5 to 40% by mass, and
   the type A hardness of the block copolymer composition measured in accordance with JIS K6253 using a durometer hardness tester (type A) is 25 to 65:

      Ar³-D³ (3)

      D⁴ (4)

      where in General Formulae (3) and (4), Ar³ represents an aromatic monovinyl polymer block, and D³ and D⁴ each represent a conjugated diene polymer block.
[4] The adhesive composition according to any one of [1] to [3], wherein the melt index measured in accordance with ASTM D1238 (G condition, 200°C, load: 5 kg) is 1.5 to 50 g/10 min.
[5] The adhesive composition according to any one of [1] to [4], wherein the block copolymer composition contains the block copolymer A1, and
   in the block copolymer A1, the ratio ((Ar¹-D¹)/D²) of the mass of the chain as a branch represented by Ar¹-D¹ to the mass of the chain as a branch represented by D² is 1.0/0.15 to 1.0/1.75.
[6] The adhesive composition according to any one of [1] to [5], wherein the block copolymer composition contains the block copolymer A1, and
   in the block copolymer A1, the ratio ((Mw(D¹))/(Mw(D²))) of the weight average molecular weight (Mw(D¹)) of the conjugated diene polymer block D¹ in the chain as a branch represented by Ar¹-D¹ to the weight average molecular weight (Mw(D²)) of a chain as the branch represented by D² is 1.0/0.3 to 1.0/1.1.
[7] The adhesive composition according to any one of [1] to [6], wherein the polyfunctional coupling agent is a compound having two or more radical polymerizable groups in the molecule.
[8] The adhesive composition according to according to any one of [1] to [7], wherein the polyfunctional coupling agent is divinylbenzene.
[9] The adhesive composition according to any one of [1] to [8], wherein the conjugated diene polymer block is an isoprene polymer block.
[10] The adhesive composition according to any one of [1] to [9], wherein the alkyl radical scavenger is at least one selected from the group consisting of 2-[1-(2-hydroxy-3,5-di-t-pentylphenyl)ethyl]-4,6-di-t-pentylphenyl acrylate and 2-t-butyl-6-(3-t-butyl-2-hydroxy-5-methylbenzyl)-4-methylphenyl acrylate.
[11] The adhesive composition according to any one of [1] to [10], further comprising at least one antioxidant selected from the group consisting of hindered phenol-based antioxidants, phosphorus-based antioxidants, sulfur-based antioxidants, and benzofuranone-based antioxidants,
   wherein the content of the antioxidant is 0.01 to 10 parts by mass relative to 100 parts by mass of the content of the block copolymer composition.
   Furthermore, the present invention provides the following hot-melt adhesive composition and adhesive prepared using the adhesive composition.
[12] A hot-melt adhesive composition comprising the adhesive composition according to any one of [1] to [11], a tackifying resin, and a cross-linking agent,
   wherein relative to 100 parts by mass of the content of the block copolymer composition in the adhesive composition, the content of the tackifying resin is 10 to 400 parts by mass, and the content of the cross-linking agent is 0.01 to 50 parts by mass.
[13] The hot-melt adhesive composition according to [12], further comprising a plasticizer in an amount of 0 to 200 parts by mass relative to 100 parts by mass of the content of the block copolymer composition in the adhesive composition.
[14] An adhesive comprising the hot-melt adhesive composition according to [12] or [13],
   wherein the adhesive is obtained by cross-linking the block copolymer A1 or the block copolymer A2 in the hot-melt adhesive composition.

### EFFECTS OF THE INVENTION

The present invention provides an adhesive composition which has excellent processability and can provide an adhesive having excellent adhesive properties.

### DESCRIPTION OF EMBODIMENTS

### <Adhesive composition>

The adhesive composition according to the present invention comprises a block copolymer composition described later and an alkyl radical scavenger.

The adhesive composition according to the present invention has excellent processability and can be suitably processed under strong shear stress (for example, biaxial extrusion processing), and can provide an adhesive which has excellent hot-melt processability. Further, the adhesive composition according to the present invention has excellent cross-linkability in addition to excellent processability, and can provide an adhesive having excellent adhesive properties (thermal stability, adhesiveness at a high temperature, and initial adhesiveness).

### 1. Block copolymer composition

The block copolymer composition used in the present invention contains a block copolymer A1 represented by General Formula (1) or a block copolymer A2 represented by General Formula (2), and the entire block copolymer composition has a weight average molecular weight (Mw) of 300,000 to 800,000. The block copolymer composition used in the present invention may contain one or both of the block copolymer A1 and the block copolymer A2.

The block copolymer composition used in the present invention constitutes a polymer component in the adhesive composition according to the present invention where the polymer component contains a conjugated diene polymer block. The block copolymer composition contains the block copolymer A1 represented by General Formula (1) or the block copolymer A2 represented by General Formula (2).

### (1-1) Block copolymer A1

The block copolymer A1 is a block copolymer represented by General Formula (1) below:

(Ar¹-D¹)ₘX¹(D²)ₙ (1)

where in General Formula (1), Ar¹ represents an aromatic monovinyl polymer block, D¹ and D² each represent a conjugated diene polymer block, m is an integer of 1 or more, n is an integer of 1 or more, m+n is an integer of 3 or more, and X¹ represents a residue of a polyfunctional coupling agent.

In General Formula (1), Ar¹-D¹ and D² each represent a chain as a branch bonded to X¹, m is the number of chains as branches represented by Ar¹-D¹ which are bonded to X¹, and n is the number of chains as branches represented by D² which are bonded to X¹. m+n is the total number of chains as branches represented by Ar¹-D¹ and chains as branches represented by D², and thus represents the number of branches of the block copolymer A1. Ar¹ represents an aromatic monovinyl polymer block, and D¹ and D² each represent a conjugated diene polymer block.

In General Formula (1), m is an integer of 1 or more, n is an integer of 1 or more, and m+n is an integer of 3 or more. Specifically, the block copolymer A1 has a branched structure having three or more chains as branches, and as the chains as branches, contains both of the chain as a branch represented by Ar¹-D¹ (a diblock chain containing an aromatic monovinyl polymer block and a conjugated diene polymer block) and the chain as a branch represented by D² (a conjugated diene polymer block chain).

In General Formula (1), m+n is an integer of 3 or more, preferably 4 to 20, more preferably 5 to 15, still more preferably 6 to 10, although not particularly limited thereto. When m+n falls within the ranges above, the processability and cross-linkability of the adhesive composition can be further enhanced, and the adhesive properties of an adhesive to be obtained can be further enhanced. m+n can be controlled by adjusting the structure of the chain as a branch represented by Ar¹-D¹, that of the chain as a branch represented by D², and coupling conditions (such as the type and amount of the polyfunctional coupling agent to be used).

The block copolymer A1 may be composed of only one block copolymer having a substantially single configuration, or may be composed of two or more block copolymers having substantially different configurations.

Alternatively, the block copolymer A1 may be a mixture of block copolymers having different integers for any one of m, n, and m+n. When the average molecular weight of the block copolymer A1 is determined by measurement using high performance liquid chromatography described later and m, n, and m+n are calculated, the averages are calculated for m, n, and m+n in the block copolymers in the mixture. Although these calculated values may not be always integers, in the present invention, integers closest to the calculated values may be defined as m, n, and m+n, respectively.

### (1-1-1) Aromatic monovinyl polymer block Ar¹

The aromatic monovinyl polymer block Ar¹ constituting the block copolymer A1 is a polymer block having an aromatic monovinyl monomer unit as its constitutional unit. Any aromatic monovinyl monomer can be used to constitute the aromatic monovinyl monomer unit for the aromatic monovinyl polymer block Ar¹ as long as it is an aromatic vinyl compound having one radical polymerizable group, and examples thereof include styrene, α-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, 2-chlorostyrene, 3-chlorostyrene, 4-chlorostyrene, 4-bromostyrene, 2-methyl-4,6-dichlorostyrene, 2,4-dibromostyrene, vinylnaphthalene, and the like. Among these, styrene is preferably used as the aromatic monovinyl monomer. These aromatic monovinyl monomers may be used alone or in combination in the aromatic monovinyl polymer block Ar¹.

The aromatic monovinyl polymer block Ar¹ may contain a monomer unit other than the aromatic monovinyl monomer unit. Examples of monomers constituting monomer units other than the aromatic monovinyl monomer unit include conjugated diene monomers such as 1,3-butadiene and isoprene (2-methyl-1,3-butadiene), α,β-unsaturated nitrile monomers, unsaturated carboxylic acid or acid anhydride monomers, unsaturated carboxylic acid ester monomers, and non-conjugated diene monomers. The content of the monomer unit other than the aromatic monovinyl monomer unit in the aromatic monovinyl polymer block Ar¹ is preferably 20% by mass or less, more preferably 10% by mass or less, particularly preferably substantially 0% by mass.

Although the aromatic monovinyl polymer block Ar¹ can have any weight average molecular weight (Mw(Ar¹)), the weight average molecular weight (Mw (Ar¹)) can be within the range of 7,000 to 18,000, and is within the range of preferably 7,500 to 17,000, more preferably 8,000 to 16,000.

In the present invention, the weight average molecular weights (Mw) and number average molecular weights (Mn) of the polymer blocks, the chains as branches, the block copolymers, the block copolymer composition, and the like are determined as values relative to polystyrenes in measurement by high performance liquid chromatography. More specifically, the weight average molecular weight and the number average molecular weight are measured by the method described in Examples.

### (1-1-2) Conjugated diene polymer block D¹

The conjugated diene polymer block D¹ constituting the block copolymer A1 is a polymer block having a conjugated diene monomer unit as its constitutional unit. Any conjugated diene monomer can be used to constitute the conjugated diene monomer unit for the conjugated diene polymer block D¹ as long as it is a conjugated diene compound, and examples thereof include 1,3-butadiene, isoprene (2-methyl-1,3-butadiene), 2,3-dimethyl-1,3-butadiene, 2-chloro-1,3-butadiene, 1,3-pentadiene, 1,3-hexadiene, and the like. Among these conjugated diene monomers, use of 1,3-butadiene and/or isoprene is preferred, and use of isoprene is particularly preferred. The conjugated diene polymer block D¹ is particularly preferably an isoprene polymer block. The conjugated diene polymer block D¹ composed of an isoprene monomer unit can further enhance the processability and cross-linkability of the adhesive composition and the adhesive properties of an adhesive to be obtained. These conjugated diene monomers can be used alone or in combination in the conjugated diene polymer block D¹. Further, the unsaturated bonds of the conjugated diene polymer block D¹ may be partially hydrogenated. In other words, the conjugated diene polymer block D¹ may be a non-hydrogenated conjugated diene polymer block, or may be a hydrogenated conjugated diene polymer block.

The conjugated diene polymer block D¹ may contain a monomer unit other than the conjugated diene monomer unit. Examples of monomers constituting monomer units other than the conjugated diene monomer unit include aromatic monovinyl monomers such as styrene and α-methylstyrene, α,β-unsaturated nitrile monomers, unsaturated carboxylic acid or acid anhydride monomers, unsaturated carboxylic acid ester monomers, and non-conjugated diene monomers. The content of the monomer unit other than the conjugated diene monomer unit in the conjugated diene polymer block D¹ is preferably 20% by mass or less, more preferably 10% by mass or less, particularly preferably substantially 0% by mass.

The weight average molecular weight (Mw(D¹)) of the conjugated diene polymer block D¹ is within the range of preferably 20,000 to 140,000, more preferably 25,000 to 120,000, still more preferably 30,000 to 100,000.

### (1-1-3) Chain as branch represented by Ar¹-D¹

The chain as a branch represented by Ar¹-D¹ which constitutes the block copolymer A1 may be formed using any coupling agent, or may be formed without using any coupling agent. In other words, the chain as a branch represented by Ar¹-D¹ may contain a residue of the coupling agent in these polymer blocks or between the polymer blocks, or may contain no residue of the coupling agent. From the viewpoint of further enhancing the processability and cross-linkability of the adhesive composition and the adhesive properties of an adhesive to be obtained, preferably, the chain as a branch represented by Ar¹-D¹ is the one that is formed without using any coupling agent and contains no residue of the coupling agent in the polymer blocks and between the polymer blocks.

The weight average molecular weight (Mw(Ar¹-D¹)) of the chain as a branch represented by Ar¹-D¹ is within the range of preferably 30,000 to 150,000, more preferably 35,000 to 130,000, still more preferably 40,000 to 110,000.

The molecular weight distribution (Mw/Mn) of the chain as a branch represented by Ar¹-D¹ is within the range of preferably 1.20 or less, more preferably 1.00 to 1.20, still more preferably 1.00 to 1.18, particularly preferably 1.00 to 1.13, particularly preferably 1.00 to 1.10.

### (1-1-4) Chain as branch represented by D²

The chain as a branch represented by D² constituting the block copolymer A1 is a polymer block chain having a conjugated diene monomer unit as its constitutional unit.

Any conjugated diene monomer can be used to constitute the conjugated diene monomer unit for the conjugated diene polymer block D² as long as it is a conjugated diene compound, and examples thereof include 1,3-butadiene, isoprene (2-methyl-1,3-butadiene), 2,3-dimethyl-1,3-butadiene, 2-chloro-1,3-butadiene, 1,3-pentadiene, 1,3-hexadiene, and the like. Among these conjugated diene monomers, use of 1,3-butadiene and/or isoprene is preferred, and use of isoprene is particularly preferred. The conjugated diene polymer block D² is particularly preferably an isoprene polymer block. The chain as a branch represented by D² which is composed of an isoprene monomer unit can further enhance the processability and cross-linkability of the adhesive composition and the adhesive properties of an adhesive to be obtained. These conjugated diene monomers can be used alone or in combination in the chain as a branch represented by D². Further, the unsaturated bonds of the chain as a branch represented by D² may be partially hydrogenated. In other words, the conjugated diene polymer block D² may be a non-hydrogenated conjugated diene polymer block, or may be a hydrogenated conjugated diene polymer block.

The chain as a branch represented by D² may contain a monomer unit other than the conjugated diene monomer unit. Examples of monomers constituting monomer units other than the conjugated diene monomer unit include aromatic monovinyl monomers such as styrene and α-methylstyrene, α,β-unsaturated nitrile monomers, unsaturated carboxylic acid or acid anhydride monomers, unsaturated carboxylic acid ester monomers, and non-conjugated diene monomers. The content of the monomer unit other than the conjugated diene monomer unit in the conjugated diene polymer block D² is preferably 20% by mass or less, more preferably 10% by mass or less, particularly preferably substantially 0% by mass.

Although the chain as a branch represented by D² can have any weight average molecular weight (Mw(D²)), the weight average molecular weight (Mw(D²)) is in the range of preferably 20,000 to 140,000, more preferably 25,000 to 120,000, still more preferably 30,000 to 100,000.

### (1-1-5) Residue X¹ of polyfunctional coupling agent

The coupling agent forming a residue X¹ of a polyfunctional coupling agent in the block copolymer A1 can be any coupling agent as long as it can bond to the chain as a branch represented by Ar¹-D¹ and the chain as a branch represented by D² to give a block copolymer having three or more chains as branches in total.

Examples of the polyfunctional coupling agent include silane compounds such as halogenated silanes such as tetrachlorosilane and tetrabromosilane, and alkoxysilanes such as tetramethoxysilane and tetraethoxysilane; tin compounds such as tin halides such as tetrachlorotin; epoxy compounds such as polycarboxylic acid esters and epoxidized soybean oil; compounds having two or more radical polymerizable groups in the molecule; and the like. Among these, preferred are those that can form multimers as a result of a reaction between coupling agents, and more preferred are compounds having two or more radical polymerizable groups in the molecule.

Examples of the compounds having two or more radical polymerizable groups in the molecule include radical polymerizable aromatic compounds having an aromatic ring and two or more radical polymerizable groups in the molecule, such as aromatic divinyl compounds, aromatic trivinyl compounds, and aromatic tetravinyl compounds; and radical polymerizable aliphatic compounds having an aliphatic group and two or more radical polymerizable groups in the molecule, such as pentaerythritol tetraacrylate. The radical polymerizable group is preferably a group containing a carbon-carbon double bond, more preferably a vinyl group.

Specific examples of the aromatic divinyl compounds include divinylbenzene (DVB), divinyltoluene, divinyl xylene, divinyl anthracene, divinylnaphthalene, divinyldurene (divinyl durene), 1,2-bis(4-vinylphenyl) ethane, and the like. Specific examples of the aromatic trivinyl compounds include trivinylbenzene and the like. Specific examples of the aromatic tetravinyl compounds include tetravinylbenzene and the like.

In the present invention, the polyfunctional coupling agent is preferably a compound having two or more radical polymerizable groups in the molecule, more preferably a radical polymerizable aromatic compound having an aromatic ring and two or more radical polymerizable groups in the molecule, still more preferably an aromatic divinyl compound, particularly preferably divinylbenzene. By using these coupling agents, a block copolymer A1 where the number of branches (m+n) falls within the above suitable range can be easily obtained, and the processability and cross-linkability of the adhesive composition and the adhesive properties of the adhesive to be obtained can be further enhanced.

### (1-1-6) Block copolymer A1

In the block copolymer A1, the ratio ((Ar¹-D¹)/D²) of the mass of the chain as a branch represented by Ar¹-D¹ to that of the chain as a branch represented by D² is preferably 1.0/0.15 to 1.0/1.75, more preferably 1.0/0.20 to 1.0/1.25, still more preferably 1.0/0.25 to 1.0/0.75, particularly preferably 1.0/0.25 to 1.0/0.5, although not particularly limited thereto. When the ratio ((Ar¹-D¹)/D²) falls within the above ranges, the processability and cross-linkability of the adhesive composition and the adhesive properties of an adhesive to be obtained can be further enhanced.

Although in the block copolymer A1, the ratio ((Mw(D¹))/(Mw(D²))) of the weight average molecular weight (Mw(D¹)) of the conjugated diene polymer block D¹ to the weight average molecular weight (Mw(D²)) of the chain as a branch represented by D² in the chain as a branch represented by Ar¹-D¹ is not particularly limited, the ratio ((Mw(B¹))/(Mw(D²))) is preferably 1.0/0.3 to 1.0/1.1, more preferably 1.0/0.5 to 1.0/1.07, still more preferably 1.0/0.7 to 1.0/1.05, particularly preferably 1.0/0.9 to 1.0/1.03. When the ratio ((Mw(D¹))/(Mw(D²))) falls within the above ranges, the processability and cross-linkability of the adhesive composition and the adhesive properties of an adhesive to be obtained can be further enhanced.

The weight average molecular weight (MwA1) of the block copolymer A1 is within the range of preferably 300,000 to 800,000, more preferably 330,000 to 700,000, still more preferably 360,000 to 650,000, particularly preferably 380,000 to 600,000, most preferably 400,000 to 550,000. When the weight average molecular weight (MwA1) of the block copolymer A1 falls within the above ranges, the processability and cross-linkability of the adhesive composition and the adhesive properties of an adhesive to be obtained can be further enhanced.

The molecular weight distribution (Mw/Mn) of the block copolymer A1 is preferably 1.40 or less, more preferably 1.00 to 1.30, still more preferably 1.00 to 1.20, particularly preferably 1.00 to 1.18, most preferably 1.00 to 1.16. When the molecular weight distribution (Mw/Mn) of the block copolymer A1 falls within the above ranges, the processability and cross-linkability of the adhesive composition and the adhesive properties of an adhesive to be obtained can be further enhanced.

The content of the aromatic monovinyl monomer unit of the block copolymer A1 (proportion of the aromatic monovinyl monomer unit in the total monomer units constituting the block copolymer A1) is within the range of preferably 5 to 40% by mass, more preferably 9 to 35% by mass, still more preferably 12 to 30% by mass, particularly preferably 15 to 28% by mass, most preferably 18 to 26% by mass. When the content of the aromatic monovinyl monomer unit of the block copolymer A1 falls within the above ranges, the processability and cross-linkability of the adhesive composition and the adhesive properties of an adhesive to be obtained can be further enhanced.

The vinyl bond content in the conjugated diene monomer unit of the block copolymer A1 (proportion of the 1,2-vinyl bond and the 3,4-vinyl bond in the total conjugated diene monomer units constituting the block copolymer A1) is within the range of preferably 1 to 20% by mass, more preferably 1 to 15% by mass, particularly preferably 1 to 10% by mass.

### (1-2) Block copolymer A2

The block copolymer composition used in the present invention may contain a block copolymer A2 described later instead of the block copolymer A1, or may contain the block copolymer A2 together with the block copolymer A1.

The block copolymer A2 is a block copolymer represented by General Formula (2) below:

(Ar-D)ₚX (2)

where in General Formula (2), Ar represents an aromatic monovinyl polymer block, D represents a conjugated diene polymer block, p is an integer of 3 or more, and X represents a residue of a polyfunctional coupling agent.

In General Formula (2), Ar-D represents a chain as a branch bonded to X; and p is the number of chains as branches represented by Ar-D which are bonded to X, and thus represents the number of branches of the block copolymer A2. Ar represents an aromatic monovinyl polymer block, and D represents a conjugated diene polymer block.

In General Formula (2), p is an integer of 3 or more. Specifically, the block copolymer A2 has a branched structure having three or more chains as branches, and the chains as branches are chains as branches represented by Ar-D (a diblock chain containing an aromatic monovinyl polymer block and a conjugated diene polymer block).

In General Formula (2), p is an integer of 3 or more, and is not particularly limited. p is an integer of preferably 4 to 20, more preferably 5 to 15, still more preferably 6 to 10. When p falls within the above ranges, the processability and cross-linkability of the adhesive composition and the adhesive properties of an adhesive to be obtained can be further enhanced. p can be controlled by adjusting the structure of the chain as a branch represented by Ar-D and coupling conditions (such as the type and amount of the polyfunctional coupling agent to be used).

The block copolymer A2 may be composed of only one block copolymer having a substantially single configuration, or may be composed of two or more block copolymers having substantially different configurations.

Alternatively, the block copolymer A2 may be a mixture of block copolymers having different integers for p. When the average molecular weight of the block copolymer A2 is determined by measurement using high performance liquid chromatography described later and p is calculated, the average is calculated for p in the block copolymers in the mixture. Although these calculated values may not be always integers, in the present invention, an integer closest to the calculated value may be defined as p.

### (1-2-1) Aromatic monovinyl polymer block Ar

The aromatic monovinyl polymer block Ar constituting the block copolymer A2 is a polymer block having an aromatic monovinyl monomer unit as its constitutional unit. Examples of aromatic monovinyl monomers used to constitute the aromatic monovinyl monomer unit for the aromatic monovinyl polymer block Ar include the same aromatic monovinyl monomers as those used to constitute the aromatic monovinyl monomer unit for the aromatic monovinyl polymer block Ar¹ in the block copolymer A1. Among these, preferred is styrene. These aromatic monovinyl monomers can be used alone or in combination in the aromatic monovinyl polymer block Ar**.**

The aromatic monovinyl polymer block Ar may contain a monomer unit other than the aromatic monovinyl monomer unit. Examples of monomers constituting monomer units other than the aromatic monovinyl monomer unit include conjugated diene monomers such as 1,3-butadiene and isoprene (2-methyl-1,3-butadiene), α,β-unsaturated nitrile monomers, unsaturated carboxylic acid or acid anhydride monomers, unsaturated carboxylic acid ester monomers, and non-conjugated diene monomers. The content of the monomer unit other than the aromatic monovinyl monomer unit in the aromatic monovinyl polymer block Ar is preferably 20% by mass or less, more preferably, 10% by mass or less, particularly preferably substantially 0% by mass.

Although the aromatic monovinyl polymer block Ar can have any weight average molecular weight (Mw(Ar)), the weight average molecular weight (Mw(Ar)) can be within the range of 7,000 to 18,000, and is within the range of preferably 7,500 to 17,000, more preferably 8,000 to 16,000.

### (1-2-2) Conjugated diene polymer block D

The conjugated diene polymer block D constituting the block copolymer A2 is a polymer block having a conjugated diene monomer unit as its constitutional unit. Examples of the conjugated diene monomer used to constitute the conjugated diene monomer unit for the conjugated diene polymer block D include the same conjugated diene monomers as those used to constitute the conjugated diene monomer unit for the conjugated diene polymer block D¹ of the block copolymer A1. Among these, use of 1,3-butadiene and/or isoprene is preferred, and use of isoprene is particularly preferred. The conjugated diene polymer block D is particularly preferably an isoprene polymer block. When the conjugated diene polymer block D is composed of an isoprene monomer unit, the processability and cross-linkability of the adhesive composition and the adhesive properties of an adhesive to be obtained can be further enhanced. These conjugated diene monomers can be used alone or in combination in the conjugated diene polymer block D. Further, the unsaturated bonds of the conjugated diene polymer block D may be partially hydrogenated. In other words, the conjugated diene polymer block D may be a non-hydrogenated conjugated diene polymer block, or may be a hydrogenated conjugated diene polymer block.

The conjugated diene polymer block D may contain a monomer unit other than the conjugated diene monomer unit. Examples of monomers constituting monomer units other than the conjugated diene monomer unit include aromatic monovinyl monomers such as styrene and α-methylstyrene, α,β-unsaturated nitrile monomers, unsaturated carboxylic acid or acid anhydride monomers, unsaturated carboxylic acid ester monomers, and non-conjugated diene monomers. The content of the monomer unit other than the conjugated diene monomer unit in the conjugated diene polymer block D is preferably 20% by mass or less, more preferably 10% by mass or less, particularly preferably substantially 0% by mass.

The weight average molecular weight (Mw(D)) of the conjugated diene polymer block D is within the range of preferably 20,000 to 140,000, more preferably 25,000 to 120,000, still more preferably 30,000 to 100,000.

### (1-2-3) Chain as branch represented by Ar-D

The chain as a branch represented by Ar-D which constitutes the block copolymer A2 may be formed using any coupling agent, or may be formed without using any coupling agent. In other words, the chain as a branch represented by Ar-D may contain a residue of the coupling agent in these polymer blocks or between the polymer blocks, or may contain no residue of the coupling agent. From the viewpoint of further enhancing the processability and cross-linkability of the adhesive composition and the adhesive properties of an adhesive to be obtained, preferably, the chain as a branch represented by Ar-D is the one that is formed without using any coupling agent, and contains no residue of the coupling agent in the polymer blocks and between the polymer blocks.

The weight average molecular weight (Mw(Ar-D)) of the chain as a branch represented by Ar-D is within the range of preferably 30,000 to 150,000, more preferably 35,000 to 130,000, still more preferably 40,000 to 110,000.

The molecular weight distribution (Mw/Mn) of the chain as a branch represented by Ar-D is within the range of preferably 1.20 or less, more preferably 1.00 to 1.20, still more preferably 1.00 to 1.18, particularly preferably 1.00 to 1.13, particularly preferably 1.00 to 1.10.

### (1-2-4) Residue X of polyfunctional coupling agent

The coupling agent forming a residue X of a polyfunctional coupling agent in the block copolymer A2 can be any block copolymer as long as it can bond to the chain as a branch represented by Ar-D to give a block copolymer having three or more chains as branches in total.

Examples of the polyfunctional coupling agent forming the residue X of the polyfunctional coupling agent include those described above as the coupling agent forming the residue X¹ of the polyfunctional coupling agent in the block copolymer A1. The polyfunctional coupling agent is preferably a compound having two or more radical polymerizable groups in the molecule, more preferably a radical polymerizable aromatic compound having an aromatic ring and two or more radical polymerizable groups in the molecule, still more preferably an aromatic divinyl compound, particularly preferably divinylbenzene. By using these coupling agents, a block copolymer A2 where the number (p) of branches falls within the above suitable range can be easily obtained, and the processability and cross-linkability of the adhesive composition and the adhesive properties of an adhesive to be obtained can be further enhanced.

### (1-2-5) Block copolymer A2

The weight average molecular weight (MwA2) of the block copolymer A2 is within the range of preferably 300,000 to 800,000, more preferably 340,000 to 750,000, still more preferably 380,000 to 700,000, particularly preferably 420,000 to 650,000, most preferably 450,000 to 600,000. When the weight average molecular weight (MwA2) of the block copolymer A2 falls within the above ranges, the processability and cross-linkability of the adhesive composition and the adhesive properties of an adhesive to be obtained can be further enhanced.

The molecular weight distribution (Mw/Mn) of the block copolymer A2 is preferably 1.40 or less, more preferably 1.00 to 1.30, still more preferably 1.00 to 1.20, particularly preferably 1.00 to 1.18, most preferably 1.00 to 1.16. When the molecular weight distribution (Mw/Mn) of the block copolymer A2 falls within the above ranges, the processability and cross-linkability of the adhesive composition and the adhesive properties of an adhesive to be obtained can be further enhanced.

The content of the aromatic monovinyl monomer unit of the block copolymer A2 (proportion of the aromatic monovinyl monomer unit in the total monomer units constituting the block copolymer A2) is within the range of preferably 5 to 40% by mass, more preferably 9 to 35% by mass, still more preferably 12 to 30% by mass, particularly preferably 15 to 28% by mass, most preferably 18 to 26% by mass. When the content of the aromatic monovinyl monomer unit of the block copolymer A2 falls within the above ranges, the processability and cross-linkability of the adhesive composition and the adhesive properties of an adhesive to be obtained can be further enhanced.

The vinyl bond content in the conjugated diene monomer unit of the block copolymer A2 (proportion of the 1,2-vinyl bond and the 3,4-vinyl bond in the total conjugated diene monomer units constituting the block copolymer A2) is within the range of preferably 1 to 20% by mass, more preferably 1 to 15% by mass, particularly preferably 1 to 10% by mass.

### (1-3) Diblock copolymer B

The block copolymer composition used in the present invention may contain a diblock copolymer B in addition to the block copolymer A1 or the block copolymer A2.

The diblock copolymer B is a diblock copolymer represented by General Formula (3) below:

Ar³-D³ (3)

where in General Formula (3), Ar³ is an aromatic monovinyl polymer block, and D³ is a conjugated diene polymer block.

When the block copolymer composition contains the block copolymer A1, the diblock copolymer B usually has the same configuration as that of the chain as a branch represented by Ar¹-D¹ constituting the block copolymer A1, but can have a different configuration. In this case, the aromatic monovinyl polymer block Ar³ and the conjugated diene polymer block D³ which constitute the diblock copolymer B are as described in the aromatic monovinyl polymer block Ar¹ and the conjugated diene polymer block D¹ in the block copolymer A1, and suitable examples are as described above. According to a method of producing the block copolymer A1 described later, usually, the configuration of the diblock copolymer B can be the same configuration as that of the chain as a branch represented by Ar¹-D¹ constituting the block copolymer A1.

When the block copolymer composition contains the block copolymer A2, the diblock copolymer B usually has the same configuration as that of the chain as a branch represented by Ar-D constituting the block copolymer A2, but can have a different configuration. In this case, the aromatic monovinyl polymer block Ar³ and the conjugated diene polymer block D³ which constitute the diblock copolymer B are as described in the aromatic monovinyl polymer block Ar and the conjugated diene polymer block D in the block copolymer A2, and suitable examples are as described above. According to the method of producing the block copolymer A2 described later, usually, the configuration of the diblock copolymer B can be the same configuration of the chain as a branch represented by Ar-D constituting the block copolymer A2.

The diblock copolymer B may be formed using any coupling agent, or may be formed without using any coupling agent. Preferably, the diblock copolymer B contains no residue of a coupling agent in the polymer blocks and between the polymer blocks.

The weight average molecular weight (MwB) of the diblock copolymer B is within the range of preferably 30,000 to 150,000, more preferably 35,000 to 130,000, still more preferably 40,000 to 110,000.

The molecular weight distribution (Mw/Mn) of the diblock copolymer B is within the range of preferably 1.20 or less, more preferably 1.00 to 1.20, still more preferably 1.00 to 1.18, particularly preferably 1.00 to 1.13, particularly preferably 1.00 to 1.10.

The content of the aromatic monovinyl monomer unit of the diblock copolymer B (proportion of the aromatic monovinyl monomer unit in the total monomer units constituting the diblock copolymer B) is within the range of preferably 5 to 40% by mass, more preferably 9 to 35% by mass, still more preferably 12 to 30% by mass, particularly preferably 15 to 28% by mass, most preferably 18 to 26% by mass.

The vinyl bond content in the conjugated diene monomer unit of the diblock copolymer B (proportion of the 1,2-vinyl bond and the 3,4-vinyl bond in the total conjugated diene monomer units constituting the diblock copolymer B) is within the range of preferably 1 to 20% by mass, more preferably 1 to 15% by mass, particularly preferably 1 to 10% by mass.

The diblock copolymer B constituting the block copolymer composition used in the present invention may be composed of only one diblock copolymer B having a substantially single configuration, or may be composed of two or more diblock copolymers B having substantially different configurations.

### (1-4) Polymer C

The block copolymer composition used in the present invention may contain a polymer C in addition to the block copolymer A1 or the block copolymer A2 and the diblock copolymer B which is optionally used. In one embodiment according to the present invention, the block copolymer composition may contain only the block copolymer A1, the block copolymer A2, the diblock copolymer B, and the polymer C, may contain only the block copolymer A1, the diblock copolymer B, and the polymer C, or may contain only the block copolymer A2, the diblock copolymer B, and the polymer C.

The polymer C is a conjugated diene polymer having a conjugated diene monomer unit as its constitutional unit, the conjugated diene polymer being represented by General Formula (4) below:

D⁴ (4)

where in General Formula (4), D⁴ is a conjugated diene polymer block.

The polymer C is a conjugated diene polymer having a conjugated diene monomer unit as its constitutional unit. Examples of the conjugated diene monomer used to constitute the conjugated diene monomer unit for the polymer C include the same conjugated diene monomers as those used to constitute the conjugated diene polymer block D² constituting the block copolymer A1. Among these, use of 1,3-butadiene and/or isoprene is preferred, and use of isoprene is particularly preferred. The conjugated diene polymer block D⁴ is particularly preferably an isoprene polymer block. When the polymer C is composed of an isoprene monomer unit, the processability and cross-linkability of the adhesive composition and the adhesive properties of an adhesive to be obtained can be further enhanced. These conjugated diene monomers can be used alone or in combination in the polymer C. Further, the unsaturated bonds of the polymer C may be partially hydrogenated. In other words, the conjugated diene polymer block D⁴ may be a non-hydrogenated conjugated diene polymer block, or may be a hydrogenated conjugated diene polymer block.

The polymer C contains a monomer unit other than the conjugated diene monomer unit. Examples of monomers constituting monomer units other than the conjugated diene monomer unit include aromatic monovinyl monomers such as styrene and α-methylstyrene, α,β-unsaturated nitrile monomers, unsaturated carboxylic acid or acid anhydride monomers, unsaturated carboxylic acid ester monomers, and non-conjugated diene monomers. The content of the monomer unit other than the conjugated diene monomer unit in the polymer C is preferably 20% by mass or less, more preferably 10% by mass or less, particularly preferably substantially 0% by mass.

When the block copolymer composition contains the block copolymer A1, the polymer C usually has the same configuration as that of the conjugated diene polymer block D² constituting the block copolymer A1, but can have a different configuration. When the block copolymer composition contains the block copolymer A1, the polymer C can be as described in the conjugated diene polymer block D² in the block copolymer A1, and suitable examples are as described above. According to the method of producing the block copolymer A1 described later, the configuration of the polymer C can be usually the same configuration of the conjugated diene polymer block D² constituting the block copolymer A1.

The weight average molecular weight (MwC) of the polymer C is within the range of preferably 20,000 to 140,000, more preferably 25,000 to 120,000, still more preferably 30,000 to 100,000.

The molecular weight distribution (Mw/Mn) of the polymer C is within the range of preferably 1.20 or less, more preferably 1.00 to 1.20, still more preferably 1.00 to 1.18, particularly preferably 1.00 to 1.13, particularly preferably 1.00 to 1.10. When the molecular weight distribution (Mw/Mn) of the polymer C falls within the above ranges, the processability and cross-linkability of the adhesive composition and the adhesive properties of an adhesive to be obtained can be further enhanced.

The vinyl bond content in the conjugated diene monomer unit in the polymer C (proportion of the 1,2-vinyl bond and the 3,4-vinyl bond in the total conjugated diene monomer units constituting the polymer C) is within the range of preferably 1 to 20% by mass, more preferably 1 to 15% by mass, particularly preferably 1 to 10% by mass.

The polymer C may be composed of one polymer C having a substantially a single configuration, or may be composed of two or more polymers C having substantially different configurations.

### (1-5) Block copolymer composition

The block copolymer composition used in the present invention contains the block copolymer A1 or the block copolymer A2, and optionally contains the diblock copolymer B and the polymer C as needed, in which the weight average molecular weight (Mw) of the entire block copolymer composition is 300,000 to 800,000.

In the present invention, the weight average molecular weight (Mw) of the entire block copolymer composition indicates the weight average molecular weight (Mw) of all the polymer components containing a conjugated diene polymer block, the polymer components constituting the block copolymer composition. For example, when the block copolymer composition is composed of the block copolymer A1, the block copolymer A2, the diblock copolymer B, and the polymer C, the weight average molecular weight (Mw) of the entire block copolymer composition indicates the weight average molecular weight (Mw) of all the polymer components composed of the block copolymer A1, the block copolymer A2, the diblock copolymer B, and the polymer C.

The weight average molecular weight (Mw) of the entire block copolymer composition used in the present invention is within the range of 300,000 to 800,000. When the weight average molecular weight (Mw) of the entire block copolymer composition falls within the above ranges, the adhesive composition according to the present invention has excellent processability, and can provide an adhesive having excellent adhesive properties. From the viewpoint of further enhancing the processability and cross-linkability of the adhesive composition and the adhesive properties of an adhesive to be obtained, the weight average molecular weight (Mw) of the entire block copolymer composition is within the range of preferably 320,000 to 750,000, more preferably 340,000 to 700,000, still more preferably 360,000 to 650,000, particularly preferably 380,000 to 600,000.

The molecular weight distribution, which is represented as the ratio (Mw/Mn) of the weight average molecular weight (Mw) of the entire block copolymer composition to the number average molecular weight (Mn) thereof, is within the range of preferably 1.01 to 2.50, more preferably 1.02 to 2.20, still more preferably 1.02 to 2.0.

When the block copolymer composition contains the block copolymer A1 and the total mass of the block copolymer composition is regarded as 100% by mass, the content of the block copolymer A1 in the block copolymer composition is within the range of preferably 10% by mass or more, more preferably 40% by mass or more, still more preferably 60% by mass or more, particularly preferably 80 to 99% by mass, most preferably 90 to 98% by mass. When the content of the block copolymer A1 in the block copolymer composition falls within the above ranges, the processability and cross-linkability of the adhesive composition and the adhesive properties of an adhesive to be obtained can be further enhanced.

When the block copolymer composition contains the block copolymer A2 and the total mass of the block copolymer composition is regarded as 100% by mass, the content of the block copolymer A2 in the block copolymer composition is within the range of preferably 10% by mass or mor, more preferably 40% by mass or more, still more preferably 60% by mass or more, particularly preferably 80 to 99% by mass, most preferably 90 to 98% by mass. When the content of the block copolymer A2 in the block copolymer composition falls within the above ranges, the processability and cross-linkability of the adhesive composition and the adhesive properties of an adhesive to be obtained can be further enhanced.

When the total mass of the block copolymer composition is regarded as 100% by mass, the total content of the block copolymer A1 and the block copolymer A2 in the block copolymer composition is within the range of preferably 10% by mass or more, more preferably 40% by mass or more, still more preferably 60% by mass or more, particularly preferably 80 to 99% by mass, most preferably 90 to 98% by mass. When the total content of the block copolymer A1 and the block copolymer A2 in the block copolymer composition falls within the above ranges, the processability and cross-linkability of the adhesive composition and the adhesive properties of an adhesive to be obtained can be further enhanced.

When the total mass of the block copolymer composition is regarded as 100% by mass, the content of the diblock copolymer B in the block copolymer composition is within the range of preferably 60% by mass or less, more preferably 40% by mass or less, still more preferably 20% by mass or less, particularly preferably 0.5 to 15% by mass, most preferably 1 to 10% by mass. When the content of the diblock copolymer B in the block copolymer composition falls within the above ranges, the processability and cross-linkability of the adhesive composition and the adhesive properties of an adhesive to be obtained can be further enhanced.

When the total mass of the block copolymer composition is regarded as 100% by mass, the content of the polymer C in the block copolymer composition is within the range of preferably 60% by mass or less, more preferably 40% by mass or less, still more preferably 20% by mass or less, particularly preferably 0.5 to 15% by mass, most preferably 1 to 10% by mass. When the content of the polymer C in the block copolymer composition falls within the above ranges, the processability and cross-linkability of the adhesive composition and the adhesive properties of an adhesive to be obtained can be further enhanced.

When the total mass of the block copolymer composition is regarded as 100% by mass, the total content of the diblock copolymer B and the polymer C in the block copolymer composition is within the range of preferably 90% by mass or less, more preferably 60% by mass or less, still more preferably 40% by mass or less, particularly preferably 1 to 20% by mass, most preferably 2 to 10% by mass. When the total content of the diblock copolymer B and the polymer C in the block copolymer composition falls within the above ranges, the processability and cross-linkability of the adhesive composition and the adhesive properties of an adhesive to be obtained can be further enhanced.

When the block copolymer composition contains the block copolymer A1, the ratio of the content of the block copolymer A1, that of the diblock copolymer B, and that of the polymer C (content of block copolymer A1/content of diblock copolymer B/content of polymer C) in the block copolymer composition in a mass basis is preferably 10 to 100/0 to 60/0 to 60, more preferably 40 to 100/0 to 40/0 to 40, still more preferably 60 to 100/0 to 20/0 to 20, particularly preferably 80 to 99/0.5 to 15/0.5 to 15, most preferably 90 to 98/1 to 10/1 to 10.

When the block copolymer composition contains the block copolymer A2, the ratio of the content of the block copolymer A2, that of the diblock copolymer B, and that of polymer C (content of block copolymer A2/content of diblock copolymer B/content of polymer C) in the block copolymer composition in a mass basis is preferably 10 to 100/0 to 60/0 to 60, more preferably 40 to 100/0 to 40/0 to 40, still more preferably 60 to 100/0 to 20/0 to 20, particularly preferably 80 to 99/0.5 to 15/0.5 to 15, most preferably 90 to 98/1 to 10/1 to 10.

The ratio of the total content of block copolymer A1 and the block copolymer A2, the content of the diblock copolymer B, and that of the polymer C (total content of block copolymer A1 and block copolymer A2/content of diblock copolymer B/content of polymer C) in the block copolymer composition in a mass basis is preferably 10 to 100/0 to 60/0 to 60, more preferably 40 to 100/0 to 40/0 to 40, still more preferably 60 to 100/0 to 20/0 to 20, particularly preferably 80 to 99/0.5 to 15/0.5 to 15, most preferably 90 to 98/1 to 10/1 to 10.

The content of the aromatic monovinyl monomer unit in the block copolymer composition, namely, the proportion of the aromatic monovinyl monomer unit in the total amount of the block copolymer composition, i.e., the proportion of the aromatic monovinyl monomer unit in the entire block copolymer component of the block copolymer composition (hereinafter, referred to as "total content of the aromatic monovinyl monomer unit" in some cases) is within the range of preferably 5 to 40% by mass, more preferably 9 to 35% by mass, still more preferably 12 to 30% by mass, particularly preferably 15 to 28% by mass, most preferably 18 to 26% by mass. When the total content of the aromatic monovinyl monomer unit falls within the above ranges, the processability and cross-linkability of the adhesive composition and the adhesive properties of an adhesive to be obtained can be further enhanced.

The total content of the aromatic monovinyl monomer unit can be easily controlled by adjusting the blending amounts of the polymers constituting the block copolymer composition in consideration of the contents of the aromatic monovinyl monomer units in the polymers. When all the polymer components constituting the block copolymer composition are constituted only with aromatic monovinyl monomer units and conjugated diene monomer units, according to the method described in Rubber Chem. Technol., 45, 1295 (1972), the polymer components are subjected to ozonolysis, and then are reduced with lithium aluminum hydride, thereby decomposing portions of the conjugated diene monomer units and taking out only portions of the aromatic monovinyl monomer units, so that the total content of the aromatic monovinyl monomer units can be easily measured.

The vinyl bond content in the conjugated diene monomer unit in the block copolymer composition (proportion of the 1,2-vinyl bond and the 3,4-vinyl bond in the total conjugated diene monomer units constituting the block copolymer composition) is within the range of preferably 1 to 20% by mass, more preferably 1 to 15% by mass, particularly preferably 1 to 10% by mass.

The type A hardness of the block copolymer composition is preferably 25 to 65, more preferably 26 to 64, still more preferably 27 to 63. When the type A hardness of the block copolymer composition falls within the above ranges, the adhesive composition can have further enhanced processability. The type A hardness is a value measured using a durometer hardness tester (type A) in accordance with JIS K6253.

The content of the block copolymer composition in the adhesive composition is preferably 90 to 99.95% by mass, more preferably 93 to 99.9% by mass, still more preferably 96 to 99.85% by mass, particularly preferably 98 to 99.8% by mass, most preferably 99 to 99.75% by mass. The processability and cross-linkability of the adhesive composition and the adhesive properties of an adhesive to be obtained can be further enhanced.

### 2. Alkyl radical scavenger

The adhesive composition according to the present invention comprises an alkyl radical scavenger in addition to the above-mentioned block copolymer composition.

The alkyl radical scavenger used in the present invention is a compound which traps alkyl radicals generated from the polymer components. The alkyl radicals can be alkyl radicals generated as a result of breaking of main chains or side chains of the polymer components, such as the block copolymers, by heat or light.

The alkyl radical scavenger is preferably a compound containing an acryloyl group or a methacryloyl group in the molecule, more preferably a compound containing an acryloyl group or a methacryloyl group and a hydroxyphenyl group in the molecule. The hydroxyphenyl group may be a hydroxyphenyl group in which at least one of the two ortho-positions of the hydroxyl group bonded to the benzene ring is substituted by a group containing two or more carbon atoms. The alkyl radical scavenger is more preferably at least one selected from the group consisting of 2-[1-(2-hydroxy-3,5-di-t-pentylphenyl)ethyl]-4,6-di-t-pentylphenyl acrylate and 2-t-butyl-6-(3-t-butyl-2-hydroxy-5-methylbenzyl)-4-methylphenyl acrylate. These may be used alone or in combination.

The content of the alkyl radical scavenger in the adhesive composition is 0.05 to 2 parts by mass relative to 100 parts by mass of the content of the block copolymer composition in the adhesive composition. An excessively small content of the alkyl radical scavenger causes poor processability, obstructs suitable processing under strong shear stress (for example, biaxial extrusion processing), and leads to a hot-melt adhesive composition having poor hot-melt processability. An excessively large content of the alkyl radical scavenger causes poor cross-linkability, and leads to an adhesive having poor adhesive properties.

In the present invention, the expression "the content of the alkyl radical scavenger is 0.05 to 2 parts by mass relative to 100 parts by mass of the content of the block copolymer composition" indicates "the content of the alkyl radical scavenger is 0.05 to 2 parts by mass relative to 100 parts by mass of the total content of the polymer components containing the conjugated diene polymer block (block copolymer composition) in the adhesive composition". For example, when the polymer components containing the conjugated diene polymer block (block copolymer composition) in the adhesive composition are composed only of the block copolymer A1, the block copolymer A2, the diblock copolymer B, and the polymer C, "the content of the alkyl radical scavenger is 0.05 to 2 parts by mass relative to 100 parts by mass of the content of the block copolymer composition" indicates "the content of the alkyl radical scavenger is 0.05 to 2 parts by mass relative to 100 parts by mass of the total content of the block copolymer A1, the block copolymer A2, the diblock copolymer B, and the polymer C in the adhesive composition". Hereinafter, for the contents of the components other than the alkyl radical scavenger, the expression "relative to 100 parts by mass of the content of the block copolymer composition" is readable as the expression "relative to 100 parts by mass of the total content of the polymer components containing the conjugated diene polymer block (block copolymer composition)".

It is sufficient that the content of the alkyl radical scavenger in the adhesive composition is 0.05 to 2 parts by mass relative to 100 parts by mass of the content of the block copolymer composition in the adhesive composition, and the content is not particularly limited. The content is preferably 0.1 to 1.5 parts by mass, more preferably 0.15 to 1 part by mass, still more preferably 0.18 to 0.8 parts by mass, particularly preferably 0.2 to 0.5 parts by mass relative to 100 parts by mass of the content of the block copolymer composition. When the content of the alkyl radical scavenger in the adhesive composition falls within the above ranges, the processability and cross-linkability of the adhesive composition and the adhesive properties of an adhesive to be obtained can be further enhanced.

### 3. Antioxidant

Preferably, the adhesive composition according to the present invention comprises an antioxidant in addition to the block copolymer composition and the alkyl radical scavenger described above. Examples of the antioxidant include hindered phenol-based antioxidants, phosphorus-based antioxidants, sulfur-based antioxidants, and benzofuranone-based antioxidants. The adhesive composition according to the present invention may consist only of the block copolymer composition, the alkyl radical scavenger, and the antioxidant described above.

### (3-1) Hindered phenol-based antioxidant

Examples of the hindered phenol-based antioxidants include compounds having a hydroxyphenyl group in which at least one of the two ortho-positions of the hydroxyl group bonded to the benzene ring is substituted by a group containing two or more carbon atoms.

Specific examples of the hindered phenol-based antioxidants include pentaerythritol tetrakis[3-(3,5-di-tert-butyl-4-hydroxyphenyl)propionate], 4-[[4,6-bis(octylthio)-1,3,5-triazin-2-yl]amino]-2,6-di-tert-butylphenol, 2,6-di-tert-butyl-p-cresol, stearyl 3-(3,5-di-tert-butyl-4-hydroxyphenyl)propionate, 2,4,6-tris(3',5'-di-tert-butyl-4'-hydroxy benzyl)mesitylene, tetrakis(methylene-3-(3,5-di-t-butyl-4-hydroxyphenyl)propionate)methane, 2,6-di-t-butyl-4-((4,6-bis(octylthio)-1,3,5-triazin-2-yl)amino)-phenol, and the like. Among these, pentaerythritol tetrakis[3-[3,5-di(tert-butyl)-4-hydroxyphenyl]propionate] and 4-[[4,6-bis(octylthio)-1,3,5-triazin-2-yl]amino]-2,6-di-tertbutylphenol are preferred, and pentaerythritol tetrakis[3-[3,5-di(tert-butyl)-4-hydroxyphenyl]propionate] and 4-[[4,6-bis(octylthio)-1,3,5-triazin-2-yl]amino]-2,6-di-tert-butylphenol are more preferred.

Although the content of the hindered phenol-based antioxidant in the adhesive composition is not particularly limited, the content is preferably 0 to 5 parts by mass, more preferably 0.01 to 2 parts by mass, still more preferably 0.02 to 1 part by mass, particularly preferably 0.05 to 0.5 parts by mass, mots preferably 0.1 to 0.3 parts by mass relative to 100 parts by mass of the content of the block copolymer composition in the adhesive composition. When the content of the hindered phenol-based antioxidant falls within the above ranges, an adhesive having further enhanced adhesive properties can be obtained.

### (3-2) Phosphorus-based antioxidant

Examples of the phosphorus-based antioxidants include monophosphite compounds, diphosphite compounds, and the like.

Specific examples of the monophosphite compounds include triphenyl phosphite, diphenyl isodecyl phosphite, phenyl diisodecyl phosphite, tris(nonylphenyl) phosphite, tris(dinonylphenyl) phosphite, tris(2,4-di-t-butylphenyl) phosphite, tris(2-t-butyl-4-methylphenyl) phosphite, tris(cyclohexylphenyl) phosphite, 2,2-methylene bis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, 10-decyloxy-9,10-dihydro-9-oxa-10-phosphaphenanthrene, and the like.

Specific examples of the diphosphite compounds include diphosphite compounds such as 4,4'-butylidene-bis(3-methyl-6-t-butylphenyl-di-tridecyl phosphite), 4,4'-isopropylidene-bis(phenyl-dialkyl(C12 to C15) phosphite), 4,4'-isopropylidene-bis(diphenylmonoalkyl(C12 to C15) phosphite), 1,1,3-tris(2-methyl-4-ditridecyl phosphite-5-t-butylphenyl)butane, tetrakis(2,4-di-t-butylphenyl)-4,4'-biphenylene diphosphite, cyclic neopentanetetraylbis(isodecyl phosphite), cyclic neopentanetetraylbis(nonylphenyl phosphite), cyclic neopentanetetraylbis(2,4-di-t-butylphenyl phosphite), cyclic neopentanetetraylbis(2,4-dimethylphenyl phosphite), and cyclic neopentanetetraylbis(2,6-di-t-butylphenyl phosphite).

Among these, monophosphite compounds are preferred, and tris(nonylphenyl) phosphite, tris(dinonylphenyl) phosphite, and tris(2,4-di-t-butylphenyl) phosphite are more preferred.

The content of the phosphorus-based antioxidant in the adhesive composition is preferably 0 to 5 parts by mass, more preferably 0.01 to 2 parts by mass, still more preferably 0.02 to 1 part by mass, particularly preferably 0.05 to 0.5 parts by mass, most preferably 0.1 to 0.3 parts by mass relative to 100 parts by mass of the content of the block copolymer composition in the adhesive composition, although not particularly limited thereto. When the content of the phosphorus-based antioxidant falls within the above ranges, an adhesive having further enhanced adhesive properties can be obtained.

### (3-3) Sulfur-based antioxidant

Examples of the sulfur-based antioxidants include dilauryl 3,3-thiodipropionate, dimyristyl 3,3'-thiodipropionate, distearyl 3,3-thiodipropionate, lauryl stearyl 3,3-thiodipropionate, pentaerythritoltetrakis-(β-lauryl-thio-propionate), 3,9-bis(2-dodecylthioethyl)-2,4,8,10-tetraoxaspiro[5,5]undecane, and the like.

The content of the sulfur-based antioxidant in the adhesive composition is preferably 0 to 5 parts by mass, more preferably 0.01 to 2 parts by mass, still more preferably 0.02 to 1 part by mass, particularly preferably 0.05 to 0.5 parts by mass, most preferably 0.1 to 0.3 parts by mass relative to 100 parts by mass of the content of the block copolymer composition in the adhesive composition, although not particularly limited thereto. When the content of the sulfur-based antioxidant falls within the above ranges, an adhesive having further enhanced adhesive properties can be obtained.

### (3-4) Benzofuranone-based antioxidant

It is sufficient that the benzofuranone-based antioxidant is a compound having a benzofuranone skeleton, and preferred is 3-arylbenzofuran-2-one having a benzofuranone skeleton and further having an aryl group as a substituent in a side chain of the furan ring. Specific examples of the benzofuranone-based antioxidants include 5,7-di-tertiary butyl-3-(3,4-di-methylphenyl)-3H-benzofuran-2-one, and the like.

The content of the benzofuranone-based antioxidant in the adhesive composition is preferably 0 to 5 parts by mass, more preferably 0.01 to 2 parts by mass, still more preferably 0.02 to 1 part by mass, particularly preferably 0.05 to 0.5 parts by mass, most preferably 0.1 to 0.3 parts by mass relative to 100 parts by mass of the content of the block copolymer composition in the adhesive composition, although not particularly limited thereto. When the content of the benzofuranone-based antioxidant falls within the above ranges, an adhesive having further enhanced adhesive properties can be obtained.

### (3-5) Antioxidant

The antioxidant is preferably at least one selected from the groups consisting of the hindered phenol-based antioxidants, the phosphorus-based antioxidants, and sulfur-based antioxidants, more preferably at least one selected from the group consisting of the hindered phenol-based antioxidants and the phosphorus-based antioxidants. These antioxidants may be used alone or in combination. For example, the antioxidant used may be one or two or more hindered phenol-based antioxidants, or may be a combination of a hindered phenol-based antioxidant and a phosphorus-based antioxidant.

The content of the antioxidant (total content when two or more antioxidants are used) in the adhesive composition is preferably 0.01 to 10 parts by mass, more preferably 0.05 to 5 parts by mass, still more preferably 0.1 to 2 parts by mass, particularly preferably 0.15 to 1 part by mass, most preferably 0.2 to 0.5 parts by mass relative to 100 parts by mass of the content of the block copolymer composition in the adhesive composition, although not particularly limited thereto. When the content of the antioxidant falls within the above ranges, an adhesive having further enhanced adhesive properties can be obtained.

### 4. Adhesive composition

The melt index of the adhesive composition according to the present invention is measured in accordance with ASTM D1238 (G condition, 200°C, load: 5 kg), and is within the range of preferably 1.5 to 50 g/10 min, more preferably 2 to 40 g/10 min, still more preferably 3 to 30 g/10 min, particularly preferably 4 to 20 g/10 min. When the melt index of the adhesive composition falls within the above ranges, the adhesive composition can have further enhanced processability. The melt index of the adhesive composition can be controlled by adjusting the molecular weights and monomer compositions of the polymers constituting the block copolymer composition, the weight average molecular weight of the entire block copolymer composition, or the like.

### 5. Method for producing adhesive composition

Suitable examples of a method for producing the adhesive composition according to the present invention include a method comprising:
a solution preparation step of preparing a solution of a block copolymer composition containing the block copolymer A1 or the block copolymer A2;
an addition step of preparing a mixed solution by adding an alkyl radical scavenger to the solution of the block copolymer composition prepared in the solution preparation step; and
a recovery step of recovering a solid adhesive composition by removing the solvent from the mixed solution prepared in the addition step. Hereinafter, such a production method will be described.

### (5-1) Solution preparation step

In the solution preparation step, any method can be used to prepare the solution of the block copolymer composition containing the block copolymer A1 or the block copolymer A2. For example, a polymerized solution containing the block copolymer composition may be prepared by polymerizing a monomer for forming the block copolymer composition, and may be used as the solution of the block copolymer composition in the addition step described later. Alternatively, a solid block copolymer composition may be prepared by any method, and then a solution of the block copolymer composition may be prepared by dissolving the solid block copolymer composition in a solvent, and may be used in the addition step described later. The method of preparing the solution of the block copolymer composition is preferably a method of producing a block copolymer composition containing the block copolymer A1 or a method of producing a block copolymer composition containing the block copolymer A2, which will be described later.

Although the block copolymer composition used in the present invention can be produced in batch by the production method described later, the block copolymer A1 or the block copolymer A2 may be provided, and may be optionally mixed with the diblock copolymer B, the polymer C, and the block copolymer D which are separately prepared.

### (5-1-1) Method of producing block copolymer composition containing block copolymer A1

Suitable examples of the method of producing the block copolymer composition containing the block copolymer A1 include a production method comprising:
a polymerization step of polymerizing an aromatic monovinyl monomer in a polymerization solvent using an organolithium initiator to obtain aromatic monovinyl polymer block chains;
a polymerization step of polymerizing a conjugated diene monomer in a polymerization solvent using an organolithium initiator in the presence of the aromatic monovinyl polymer block chains to obtain diblock chains and conjugated diene polymer block chains; and
a coupling step of reacting a polyfunctional coupling agent with the diblock chains and the conjugated diene polymer block chains.

### (Polymerization step)

The organolithium initiator used in the polymerization step can be any known organolithium initiator that can initiate polymerization of the aromatic monovinyl monomer and the conjugated diene monomer, and specific examples thereof include organic monolithium initiators such as methyllithium, n-propyllithium, n-butyllithium, and sec-butyllithium. Among these, preferred is n-butyllithium. The amount of the organolithium initiator to be used can be determined by calculation according to the molecular weight of a desired polymer by a method known to persons skilled in the art. In the present invention, since use of the organolithium initiator causes the polymerization reaction to proceed with living properties, a polymer having an active end is present in the polymerization reaction system. For this reason, in the present invention, the polymer chains obtained in the polymerization step can have active ends.

The polymerization solvent can be any polymerization solvent inert to organolithium initiator, and is not particularly limited. For example, an open-chain hydrocarbon solvent, a cyclic hydrocarbon solvent, or a mixed solvent thereof is used. Examples of the open-chain hydrocarbon solvent include C₄ to C₆ open-chain alkanes and alkenes, such as n-butane, isobutane, n-hexane, or a mixture thereof; 1-butene, isobutylene, trans-2-butene, cis-2-butene, or a mixture thereof; 1-pentene, trans-2-pentene, cis-2-pentene, or a mixture thereof; n-pentane, isopentane, neo-pentane, or a mixture thereof; and 1-pentene, trans-2-pentene, cis-2-pentene, or a mixture thereof. Examples of the cyclic hydrocarbon solvent include aromatic hydrocarbons such as benzene, toluene, and xylene; and alicyclic hydrocarbons such as cyclohexane; and the like. To control the polymerization temperature and control the molecular weight distribution, an open-chain hydrocarbon solvent and a cyclic hydrocarbon solvent are used in the form of a mixture, in which the mass ratio of "the open-chain hydrocarbon solvent to the cyclic hydrocarbon solvent" is more preferably 5:95 to 50:50, still more preferably 10:90 to 40:60.

The polymerization reaction can also be performed in the presence of a polar compound. Use of a polar compound allows adjustment of the polymerization initiation rate and the molecular weight distribution. Examples of the polar compound include aromatic or aliphatic ethers and tertiary amines having a relative permittivity (25°C) of 2.5 to 5.0, and the like. Specific examples of the polar compound include aromatic ethers such as diphenyl ether and anisole; aliphatic ethers such as diethyl ether and dibutyl ether; tertiary monoamines such as trimethylamine, triethylamine, and tripropylamine; tertiary polyamines such as tetramethylethylenediamine and tetraethylethylenediamine; and the like. These polar compounds can be used alone or in combination. The polar compound is used in an amount of preferably 0.001 to 50 mol, more preferably 0.005 to 10 mol relative to 1 mol of the organolithium initiator.

A method of polymerizing the aromatic monovinyl monomer is not particularly limited, and any of generally used methods may be used: for example, a batch polymerization method of feeding the total amount of the aromatic monovinyl monomer and the total amount of the initiator to a polymerization system in batch, and reacting these; a continuous polymerization method of reacting these while continuously feeding these to a polymerization system; and a method of polymerizing part of the monomer using part of the initiator until a predetermined conversion ratio is reached, and then continuing the polymerization by adding the remaining monomer and the remaining initiator. The polymerization is performed at a temperature in the range of usually 0°C to 90°C, preferably 20°C to 80°C. If it is difficult to control the reaction temperature, preferably, the temperature is controlled by reflux cooling using a reaction vessel provided with a reflux type condenser.

By polymerizing the aromatic monovinyl monomer in the solvent using the organolithium initiator under such conditions described above, a solution containing aromatic monovinyl polymer block chains can be obtained. The aromatic monovinyl polymer block chains obtained through the polymerization usually have active ends. Since the aromatic monovinyl polymer block chains obtained will form the aromatic monovinyl polymer block (Ar¹) or the aromatic monovinyl polymer block (Ar³), the amount of the monomer used in this polymerization step can be determined according to the weight average molecular weight of the aromatic monovinyl polymer block (Ar¹) and that of the aromatic monovinyl polymer block (Ar³).

In the next step, an organic lithium initiator and a conjugated diene monomer are added to the resulting solution containing the aromatic vinyl polymer block chains, followed by polymerization. Thereby, a solution containing diblock chains and conjugated diene polymer block chains can be obtained. Note that the diblock chains and the conjugated diene polymer block chains obtained by the polymerization usually have active ends. In the diblock chains obtained, a polymer chain which will form the conjugated diene polymer block (D¹) or the conjugated diene polymer block (D³) is further bonded to a polymer chain which will form the aromatic monovinyl polymer block (Ar¹) and that which will form the aromatic monovinyl polymer block (Ar³). Furthermore, the conjugated diene polymer block chains obtained will form the conjugated diene polymer block (D²) and the polymer C. For this reason, the amount of the monomer used in this polymerization step can be determined according to the weight average molecular weight of the conjugated diene polymer block (D¹), that of the conjugated diene polymer block (D²), that of the conjugated diene polymer block (D³), and that of the polymer C. It is sufficient that the polymerization reaction temperature, the polymerization time, and the polymerization pressure are controlled to fall within the same ranges as those in the polymerization of the aromatic monovinyl monomer. The vinyl bond content in the conjugated diene monomer unit may also be adjusted using the above-mentioned polar compound as a randomizer during the polymerization of the conjugated diene monomer.

### (Coupling step)

In the next step, a polyfunctional coupling agent is added to the solution containing diblock chains and conjugated diene polymer block chains. Thereby, the active ends included in the diblock chains, those included in the conjugated diene polymer block chains, and the polyfunctional coupling agent are reacted, so that three or more chains as branches are bonded through a residue of the polyfunctional coupling agent to form the block copolymer A1. The polyfunctional coupling agent to be used can be those described above. A compound having action to promote the coupling reaction can also be added.

The amount of the polyfunctional coupling agent used is appropriately adjusted according to the number of chains as branches in the block copolymer A1 and the content of the block copolymer A1 in the block copolymer composition. The amount of the polyfunctional coupling agent used is within the range of preferably 0.0001 to 20 mol, more preferably 0.01 to 10 mol, still more preferably 0.02 to 6 mol relative to 1 mol of the organolithium initiator. When the amount of the polyfunctional coupling agent used falls within the ranges above, byproducts of the polymer component other than the block copolymer A1 can be suppressed, and a block copolymer composition containing the target block copolymer A1 can be easily obtained.

Although the appropriate amount of the polyfunctional coupling agent used can be determined by calculation according to the number of chains as branches in the target block copolymer A1 and the content of the block copolymer A1 in the block copolymer composition, preferably, a preliminary experiment is performed to obtain an optimum value because the organolithium initiator or the polyfunctional coupling agent is deactivated in an actual polymerization reaction. A reaction terminator such as methanol can be used, as needed, to adjust the coupling ratio. Furthermore, the diblock chains and the conjugated diene polymer block chains obtained through the polymerization step may be left unreacted by adjusting the amount of the polyfunctional coupling agent used or using the reaction terminator, and may be finally recovered as the diblock copolymer B and the polymer C.

The reaction temperature is preferably 10 to 150°C, more preferably 30 to 130°C, still more preferably 40 to 90°C. The time needed for the reaction varies depending on the conditions, but it is usually within 48 hours, preferably 0.5 to 10 hours.

The solution of the block copolymer composition containing the block copolymer A1 can be prepared by the above-mentioned method.

### (5-1-2) Method of producing block copolymer composition containing block copolymer A2

Suitable examples of a method of producing the block copolymer composition containing the block copolymer A2 include a production method comprising:
a polymerization step of polymerizing an aromatic monovinyl monomer in a polymerization solvent using an organolithium initiator to obtain a solution containing aromatic monovinyl polymer block chains;
a polymerization step of adding a conjugated diene monomer to the solution containing the aromatic monovinyl polymer block chains, followed by polymerization to obtain diblock chains; and
a coupling step of reacting a polyfunctional coupling agent with the diblock chains.

### (Polymerization step)

The polymerization step of polymerizing an aromatic monovinyl monomer in a polymerization solvent using an organolithium initiator to obtain a solution containing aromatic monovinyl polymer block chains can be performed in the same manner as in the corresponding polymerization step in the method of producing the block copolymer composition containing the block copolymer A1, and suitable examples are as described above.

Specifically, the solution containing aromatic monovinyl polymer block chains can be obtained by polymerizing the aromatic monovinyl monomer in a solvent using an organolithium initiator under such conditions. The aromatic monovinyl polymer block chains obtained through the polymerization usually have active ends. Since the aromatic monovinyl polymer block chains obtained will form the aromatic monovinyl polymer block (Ar) or the aromatic monovinyl polymer block (Ar³), the amount of the monomer used in this polymerization step can be determined according to the weight average molecular weight of the aromatic monovinyl polymer block (Ar) and that of the aromatic monovinyl polymer block (Ar³).

In the next step, a conjugated diene monomer is added to the resulting solution containing the aromatic vinyl polymer block chains, followed by polymerization. Thereby, a solution containing diblock chains can be obtained. Note that the diblock chains obtained through the polymerization usually have active ends. In the diblock chains obtained, a polymer chain which will form the conjugated diene polymer block (D) or the conjugated diene polymer block (D³) is further bonded to a polymer chain which will form the aromatic monovinyl polymer block (Ar) or that which will form the aromatic monovinyl polymer block (Ar³). For this reason, the amount of the monomer used in this polymerization step can be determined according to the weight average molecular weight of the conjugated diene polymer block (D) and that of the conjugated diene polymer block (D³). The polymerization reaction temperature, the polymerization time, and the polymerization pressure may be controlled to fall within the same ranges as those in the polymerization of the aromatic monovinyl monomer. The vinyl bond content in the conjugated diene monomer unit may also be adjusted using the above-mentioned polar compound as a randomizer during the polymerization of the conjugated diene monomer.

### (Coupling step)

In the next step, a polyfunctional coupling agent is added to the solution containing diblock chains. Thereby, the active ends included in the diblock chains and the polyfunctional coupling agent are reacted, so that three or more chains as branches are bonded through a residue of the polyfunctional coupling agent to form the block copolymer A2. The polyfunctional coupling agent to be used can be those described above. A compound having action to promote the coupling reaction can also be added.

The amount of the polyfunctional coupling agent used is appropriately adjusted according to the number of chains as branches in the block copolymer A2 and the content of the block copolymer A2 in the block copolymer composition. The amount of the polyfunctional coupling agent used is within the range of preferably 0.0001 to 20 mol, more preferably 0.01 to 10 mol, still more preferably 0.02 to 6 mol relative to 1 mol of the organolithium initiator. When the amount of the polyfunctional coupling agent used falls within the ranges above, byproducts of the polymer component other than the block copolymer A2 can be suppressed, and a block copolymer composition containing the target block copolymer A2 can be easily obtained.

Although the appropriate amount of the polyfunctional coupling agent used can be determined by calculation according to the number of chains as branches in the target block copolymer A2 and the content of the block copolymer A2 in the block copolymer composition, preferably, a preliminary experiment is performed to obtain an optimum value because the organolithium initiator or the polyfunctional coupling agent is deactivated in an actual polymerization reaction. A reaction terminator such as methanol can be used, as needed, to adjust the coupling ratio. Furthermore, the diblock chains obtained through the polymerization step may be left unreacted by adjusting the amount of the polyfunctional coupling agent used or using a reaction terminator, and may be finally recovered as the diblock copolymer B.

The conditions for the coupling step can be the same conditions as those in the coupling step in the method of producing the block copolymer composition containing the block copolymer A1, and suitable examples can be as described above.

The solution of the block copolymer composition containing the block copolymer A2 can be prepared by the above-mentioned method.

### (5-2) Addition step

In the addition step, an alkyl radical scavenger is added to the solution of the block copolymer composition containing the block copolymer A1 or the block copolymer A2 prepared as above. Examples of the alkyl radical scavenger include those listed above as the alkyl radical scavenger contained in the adhesive composition according to the present invention.

In the addition step, a polymerization terminator and antioxidant may be added, as needed, in addition to the alkyl radical scavenger. Examples of the polymerization terminator include water, methanol, ethanol, propanol, hydrochloric acid, citric acid, and the like. Examples of an antioxidant include those listed above as the antioxidant which can be contained in the adhesive composition according to the present invention.

In the addition step, the alkyl radical scavenger and the polymerization terminator and antioxidant which are optionally used can be added by a normal method, which can be any method as long as the target adhesive composition can be recovered in the recovery step described later.

By the method described above, a mixed solution containing the block copolymer composition, the alkyl radical scavenger, and an optional antioxidant used as needed can be prepared.

### (5-3) Recovery step

In the recovery step, the solvent is removed from the mixed solution prepared as above to recover a solid adhesive composition.

The method of removing the solvent from the mixed solution to recover a solid adhesive composition is not particularly limited, and examples thereof include a method of subjecting the mixed solution to a known method such as direct drying or steam stripping. When the polymer components are recovered as a slurry by performing steam stripping or the like on the solution, the adhesive composition in the form of crumbs can be recovered by dehydrating the slurry using any dehydrator such as an extruder-type squeezer. The crumbs may be dried using any dryer such as a band dryer or an expansion extrusion dryer. Further, the solid adhesive composition may be used, as needed, after it is processed into pellets by a normal method.

The adhesive composition according to the present invention, which has excellent processability, can be suitably processed under strong shear stress (for example, biaxial extrusion processing). The adhesive composition according to the present invention may be the one subjected to processing under strong shear stress (for example, biaxial extrusion processing).

When strong shear stress is applied to the block copolymer composition, alkyl radicals are generated accompanied by breaking of chains due to the shear stress. When these alkyl radicals react with a residue (X¹ or X) of the polyfunctional coupling agent in the block copolymer A1 or the block copolymer A2 contained in the block copolymer composition, cross-linking of the block copolymer A1 or the block copolymer A2 unintentionally progresses, causing a reduction in melt index. If such a block copolymer composition having a significantly reduced melt index is used, an adhesive having poor hot-melt processability is obtained.

In contrast, because the adhesive composition according to the present invention comprises the block copolymer A1 or the block copolymer A2 and the alkyl radical scavenger, cross-linking of the block copolymer A1 or the block copolymer A2 accompanied by the above-mentioned reaction is suppressed even if the adhesive composition is processed under strong shear stress (for example, biaxial extrusion processing), and thus the change in melt index before and after the processing is reduced. For this reason, the adhesive composition according to the present invention can be suitably subjected to such processing. Furthermore, an adhesive having excellent hot-melt processability can be obtained even if the adhesive composition subjected to such processing is used. The adhesive composition according to the present invention has excellent processability, and can provide an adhesive having excellent adhesive properties.

The progression of cross-linking accompanied by the reaction between alkyl radicals and the residue of the polyfunctional coupling agent is a problem unique to the case where the polyfunctional coupling agent used is a coupling agent allowing formation of a block copolymer having three or more chains as branches in total. On the other hand, use of a coupling agent not allowing formation of a block copolymer having three or more chains as branches in total, such as dichlorodimethylsilane, does not cause such a problem of progression of cross-linking described above.

### 6. Hot-melt adhesive composition

The hot-melt adhesive composition according to the present invention comprises the above-mentioned adhesive composition according to the present invention, a tackifying resin, and a cross-linking agent. Since the hot-melt adhesive composition according to the present invention comprises the above-mentioned adhesive composition according to the present invention, it can provide an adhesive having excellent hot-melt processability and cross-linkability and having excellent adhesive properties (thermal stability, adhesiveness at a high temperature, and initial adhesiveness).

### (6-1) Tackifying resin

As the tackifying resin, a conventionally known tackifying resin can be used. Specifically, examples of the tackifying resin include rosin; modified rosins such as disproportionated rosin and dimerization rosin; esterified products of polyhydric alcohols such as glycol, glycerol, and pentaerythritol with rosin or modified rosins; terpene resins; aliphatic, aromatic, and alicyclic hydrocarbon resins and aliphatic-aromatic copolymerized hydrocarbon resins or hydrides thereof; phenol resins; coumarone-indene resins; and the like. The tackifying resins preferably used are aliphatic hydrocarbon resins or aliphatic-aromatic copolymerized hydrocarbon resins which have high compatibility with the block copolymer composition used in the present invention. These tackifying resins may be used alone or in combination.

The content of the tackifying resin in the hot-melt adhesive composition is within the range of preferably 10 to 400 parts by mass, more preferably 30 to 300 parts by mass, still more preferably 60 to 200 parts by mass relative to 100 parts by mass of the content of the block copolymer composition in the adhesive composition contained in the hot-melt adhesive composition.

### (6-2) Cross-linking agent

As the cross-linking agent, a known cross-linking agent used in the hot-melt adhesive composition can be used. Representative cross-linking systems include a peroxide cross-linking system, a sulfur cross-linking system, and a photo-cross-linking system.

The peroxide cross-linking system includes a peroxide-based cross-linking agent. Examples of the peroxide-based cross-linking agent include t-butyl hydroperoxide, cumene hydroperoxide, dicumyl peroxide, dit-butyl peroxide, t-butylcumyl peroxide, 2,5-dimethyl-t-butylperoxyhexane, 2,5-dimethyl-t-butylperoxyhexyne, 1,3-bis(t-butylperoxyisopropyl)benzene, p-chlorobenzoyl peroxide, t-butylperoxy benzoate, t-butylperoxyisopropyl carbonate, t-butyl benzoate, and the like.

In the peroxide cross-linking system, in addition to these peroxide-based cross-linking agents, a polyfunctional unsaturated compound is generally used in combination, examples of the polyfunctional unsaturated compound including vulcanizing aid, such as trimethylolpropane trimethacrylate, divinylbenzene, ethylene dimethacrylate, polyethylene glycol dimethacrylate, triallyl isocyanurate, triallyl cyanurate, diallyl phthalate, diallyl itaconate, and triallyl trimellitate.

The sulfur cross-linking system includes a sulfur-based cross-linking agent. Examples of the sulfur-based cross-linking agent include sulfurs such as powdered sulfur, flowers of sulfur, precipitated sulfur, colloidal sulfur, surface-treated sulfur, and insoluble sulfur; sulfur compounds such as sulfur chloride, sulfur dichloride, morpholine disulfide, alkylphenol disulfide, N,N'-dithio-bis(hexahydro-2H-azepinone-2), phosphorus-containing polysulfide, and polymer polysulfide; tetramethylthiuram disulfide, selenium dimethyldithiocarbamate, and 2-(4'-morpholinodithio)benzothiazole; and the like. Further, in the sulfur cross-linking system, in addition to these sulfur-based cross-linking agents, stearic acid and a sulfur vulcanization accelerator such as a guanidine-based vulcanization accelerator, an aldehyde-amine-based vulcanization accelerator, an aldehyde-ammonia-based vulcanization accelerator, a thiazole-based vulcanization accelerator, a sulfenamide-based vulcanization accelerator, a thiourea-based vulcanization accelerator, or a xanthate-based vulcanization accelerator can be used in combination.

The photo-cross-linking system can be any single compound or a combination of compounds which can produce free radicals in response to light such as ultraviolet light (UV) so that polymerization of one or more monomers can be initiated without undue termination reaction. As known photo-cross-linking systems, in particular, free radical photoinitiators, such as quinone, benzophenone, benzoin ether, allyl ketones, peroxide, biimidazole, benzyl dimethyl ketal, hydroxyalkylphenylacetone, dialkoxyacetophenones, trimethylbenzoylphosphine oxide derivatives such as bis(2,4,6-trimethylbenzoyl)-phenylphosphine oxide, aminoketones, benzoyl cyclohexanol, methyl thiophenyl morpholino ketones, morpholino phenyl amino ketone, alpha-halogenoacetophenones, oxysulfonyl ketone, sulfonyl ketones, oxysulfonyl ketones, benzoyloxime esters, thioxanthones such as 2-isopropyl thioxanthone, camphorquinone, ketocoumarin, and Michler's ketone can be used. Alternatively, the photo-cross-linking system may be a mixture of compounds which give free radicals when one of them is triggered by a sensitizer activated by radiation. Preferably, the photo-cross-linking system is sensitive to visible light or ultraviolet light (actinic radiation). In the photo-cross-linking system, the free radical photoinitiator can also be used in the above-mentioned polyfunctional unsaturated compound.

The cross-linking agent used in the present invention is not limited to the cross-linking agents listed above, and may be one capable of cross-linking the hot-melt adhesive composition in response to an active energy ray such as an electron ray or radiation.

The content of the cross-linking agent in the hot-melt adhesive composition is within the range of preferably 0.01 to 50 parts by mass, more preferably 0.1 to 20 parts by mass, still more preferably 0.5 to 10 parts by mass relative to 100 parts by mass of the content of the block copolymer composition in the adhesive composition contained in the hot-melt adhesive composition.

### (6-3) Plasticizer

The hot-melt adhesive composition according to the present invention may contain a plasticizer in addition to the adhesive composition, the tackifying resin, and the cross-linking agent described above.

The plasticizer (softening agent) is not particularly limited, and an organic compound liquid at room temperature (23°C) is suitably used. The type of the plasticizer is not particularly limited as long as the plasticizer has compatibility with the block copolymer composition in the adhesive composition. Specifically, aromatic, paraffinic, or naphthenic process oils, and liquid polymers such as polybutene and polyisobutylene, which are usually added to the hot-melt adhesive composition, can be used. Among these, paraffinic process oils or naphthenic process oils are particularly suitable. These plasticizers may be used alone or in combination.

The content of the plasticizer in the hot-melt adhesive composition is in the range of preferably 0 to 200 parts by mass, more preferably 1 to 100 parts by mass, still more preferably 2 to 50 parts by mass relative to 100 parts by mass of the content of the block copolymer composition in the adhesive composition contained in the hot-melt adhesive composition. When the content of the plasticizer falls within the above ranges, the hot-melt processability can be further enhanced while bleed is suppressed.

### (6-4) Other components

The hot-melt adhesive composition according to the present invention may contain a polymer other than the essential components. Examples of such a polymer include, but should not be limited to, conjugated diene homopolymers such as polybutadiene and polyisoprene; aromatic vinyl-conjugated diene random copolymers such as (styrene-butadiene) random copolymer and (styrene-isoprene) random copolymer; aromatic vinyl homopolymers such as polystyrene; and polymers having elasticity at room temperature (23°C), such as isobutylene polymer, acrylic polymer, ester polymer, ether polymer, urethane polymer, and polyvinyl chloride. In the hot-melt adhesive composition according to the present invention, the content of these polymers is preferably 20 parts by mass or less, more preferably 10 parts by mass or less relative to 100 parts by mass of the content of the block copolymer composition in the adhesive composition contained in the hot-melt adhesive composition.

The hot-melt adhesive composition according to the present invention can contain an antioxidant as needed. The type of antioxidant is not particularly limited, and examples thereof include those listed as the antioxidant which can be contained in the adhesive composition according to the present invention. These antioxidants may be used alone or in combination. When the hot-melt adhesive composition according to the present invention is produced using the adhesive composition containing the antioxidant, an antioxidant which is the same with or different from the antioxidant contained in the adhesive composition can be added as needed.

When the content of the antioxidant in the hot-melt adhesive composition (total content of the antioxidant in the adhesive composition and the antioxidant added later when the adhesive composition containing the antioxidant is used) is not particularly limited. The content is within the range of preferably 10 parts by mass or less, more preferably 0.5 to 5 parts by mass relative to 100 parts by mass of the content of the block copolymer composition in the adhesive composition contained in the hot-melt adhesive composition.

The hot-melt adhesive composition according to the present invention can further contain other compounding agents such as wax, a heat stabilizer, an ultraviolet absorbing agent, and a filler. The hot-melt adhesive composition according to the present invention is preferably a solvent-free composition not containing a solvent.

### (6-5) Hot-melt adhesive composition

To obtain the hot-melt adhesive composition according to the present invention, the block copolymer composition, the tackifying resin, the cross-linking agent, and other components optionally used can be mixed by any method, and examples thereof include a method of dissolving the components in a solvent, homogenously mixing these, and then removing the solvent by heating or the like; and a method of melt mixing the components with a kneader or the like. Among these, melt mixing is suitable from the viewpoint of more efficiently mixing the components. The temperature during melt mixing is usually in the range of 100 to 200°C, although not particularly limited thereto.

The cross-linkability of the hot-melt adhesive composition according to the present invention after cross-linking of the hot-melt adhesive composition is desirably set such that 50% or more of the block copolymer composition has a high molecular weight, more desirably set such that 70% or more of the block copolymer composition has a high molecular weight, and still more desirably set such that 80% or more of the block copolymer composition has a high molecular weight. When the hot-melt adhesive composition has such cross-linkability, it can provide an adhesive having more excellent adhesive properties (thermal stability, adhesiveness at a high temperature, and initial adhesiveness).

To obtain appropriate cross-linkability, cross-linkability may be appropriately controlled by selecting the vinyl bond content in the conjugated diene monomer unit in the block copolymer composition, the types and amounts of compounding components such as a cross-linking agent, and the irradiation amount of an active energy ray to be irradiated, such as light.

When ultraviolet light is used as the active energy ray, it is preferred that using an ultraviolet light source such as a high-pressure mercury lamp, a low-pressure mercury lamp, an excimer laser, or a metal halide lamp, the irradiation amount be selected within the range of usually 0.03 to 5 J/cm². At that time, a filter for cutting ultraviolet light in the short wavelength side, a Pyrex(registered trademark) glass, or a polyester sheet may be used as needed. The temperature during irradiation with ultraviolet light is not particularly limited, and the heating condition from room temperature to 180°C can be selected. For example, a layer formed by applying the hot-melt adhesive composition to a substrate can be irradiated with ultraviolet light.

### 7. Adhesive

The adhesive according to the present invention comprises the above-mentioned hot-melt adhesive composition according to the present invention, and is obtained by cross-linking the block copolymer A1 or the block copolymer A2 in the hot-melt adhesive composition.

In the adhesive according to the present invention, preferably 50% by mass or more, more preferably 70% by mass or more, still more preferably 80% by mass or more of the block copolymer composition contained in the hot-melt adhesive composition is cross-linked from the viewpoint of further enhancing the adhesive properties. In particular, the adhesive composition according to the present invention can provide an adhesive having excellent hot-melt processability and excellent adhesive properties (thermal stability, adhesiveness at a high temperature, and initial adhesiveness), and also has excellent cross-linkability. Thus, the block copolymer contained in the hot-melt adhesive composition can reach a relatively high cross-linking ratio even with a relatively small amount of energy, so that an adhesive having a large amount of cross-linking sites can be obtained.

The hot-melt adhesive composition and the adhesive according to the present invention can be used in any application (object to be bonded), and can be used in a variety of bonding applications in which hot-melt bonding is applicable. Among these, the hot-melt adhesive composition and the adhesive according to the present invention can be particularly suitably used as an adhesive for so-called tapes in which the hot-melt adhesive composition is hot-melt applied onto a film-shaped substrate. For example, the hot-melt adhesive composition according to the present invention after melted by heating is hot-melt applied onto a substrate; and before the hot-melt adhesive composition completely solidifies, an adherent formed from a material identical to or different from that for the substrate can be bonded to the substrate by press-bonding. At this time, the hot-melt adhesive composition can also be cross-linked into the adhesive. The hot-melt adhesive composition according to the present invention has favorable hot-melt processability, which contributes to a reduction in rejection rate and an enhancement in productivity in production of such tapes. In addition, the resulting tapes can have excellent adhesive properties (thermal stability, adhesiveness at a high temperature, and initial adhesiveness). The hot-melt adhesive composition and the adhesive according to the present invention can also be suitably used in sanitary goods such as disposable diaper and sanitary napkins; packaging for food products such as frozen food products, fresh food products, and confectionery; packaging for members such as automobile parts and mechanical parts; packaging for electrical products such as televisions, audio products, and refrigerators; applications to bookbinding of slips, books, and catalogs; applications to production of bags such as kraft bags, polypropylene bags, and polyethylene bags; applications to clothes, such as hemming of coats, bonding of leathers and fabrics, and bonding of interlinings; and the like.

The hot-melt adhesive composition and the adhesive according to the present invention can be used in production of labels. The label preferably includes an adhesive layer formed from the hot-melt adhesive composition or the adhesive according to the present invention, and a support. Usually, the adhesive layer can be formed by applying the hot-melt adhesive composition according to the present invention onto the support, then drying the composition, and optionally cross-linking the composition.

Examples of the support to be used include, but should not be limited to, papers such as Kraft paper, Japanese paper, high quality paper, and synthetic paper; clothes such as cotton cloth, spun cloth, and polyester cloth; resin films such as cellophane films, polyvinyl chloride films, polypropylene films, and polyethylene films; metal foils such as aluminum foils and copper foils; non-woven fabrics such as polyester non-woven fabrics and rayon non-woven fabrics; and the like. These supports may have a surface preliminarily subjected to a corona discharge treatment or coated with a primary coating agent.

The label obtained using the hot-melt adhesive composition or the adhesive according to the present invention may be cut or punched into an appropriate shape according to its use and application. Furthermore, the adhesive layer included in the label obtained using the hot-melt adhesive composition or the adhesive according to the present invention is not limited to those continuously formed. For example, the adhesive layer may be formed to have a regular pattern (such as a punctuate or stripe pattern) or a random pattern.

The present invention is not limited to the above embodiment. The above embodiment is illustrative, and covers any ones having substantially the same configuration as technical ideas described in CLAIMS of the present invention and having the same effects within the technical scope of the present invention.

### EXAMPLES

Hereinafter, the present invention will now be more specifically described by way of Examples and Comparative Examples. In Examples, "parts" and "%" are mass-based unless otherwise specified.

A variety of measurements were performed by the methods below.

### [Weight average molecular weight and molecular weight distribution]

High performance liquid chromatography was performed using tetrahydrofuran at a flow rate of 0.35 ml/min as a carrier to determine molecular weights relative to polystyrene standards. The apparatus used was HLC8320 available from Tosoh Corporation provided with three Shodex (Registered trademark) KF-404HQ columns (available from Showa Denko K.K.) connected in series (column temperature: 40°C). The detectors used were a differential refractometer and an ultraviolet detector. For molecular weight determination, calibration was performed at 12 points using standard polystyrenes (500 to 3,000,000) available from Polymer Laboratories Ltd.

### [Contents of polymers in block copolymer composition]

The contents of the polymers in the block copolymer composition were determined from the area ratios of peaks corresponding to the polymers (block copolymer A1, block copolymer A2, diblock copolymer B, and polymer C) in a chart obtained by high performance liquid chromatography described above.

### [Weight average molecular weight of styrene polymer block in block copolymer]

According to the method described in Rubber Chem. Technol., 45, 1295 (1972), isoprene polymer blocks in a block copolymer were decomposed by reacting the block copolymer with ozone, followed by reduction with lithium aluminum hydride. Specifically, the following procedure was performed. That is, 300 mg of a sample was dissolved in 100 ml of dichloromethane treated with a molecular sieve and placed into a reaction vessel. This reaction vessel was placed in a cooling tank, and was cooled to -25°C. Thereafter, ozone generated with an ozone generator was introduced while oxygen was being flowed at a flow rate of 170 ml/min in the reaction vessel. After 30 minutes from the start of the reaction, by introducing the gas flowing out of the reaction vessel into a potassium iodide aqueous solution, it was confirmed that the reaction was completed. Then, 50 ml of diethyl ether and 470 mg of lithium aluminum hydride were charged into another reaction vessel purged with nitrogen, and a solution reacted with ozone was slowly added dropwise to this reaction vessel while the reaction vessel was being cooled with iced water. The reaction vessel was then placed in a water bath, and was gradually heated to reflux at 40°C for 30 minutes. Subsequently, while the solution was being stirred, diluted hydrochloric acid was added dropwise in small portions to the reaction vessel, and the addition was continued until generation of hydrogen was hardly observed. After this reaction, a solid product formed in the solution was separated through a filter. The solid product was extracted with 100 ml of diethyl ether for 10 minutes. This extracted solution and the filtrate during the separation were combined, and the solvent was distilled off therefrom to obtain a solid sample. The sample thus obtained was measured for weight average molecular weight by the above-mentioned method of measuring the weight average molecular weight, and the value was defined as the weight average molecular weight of the styrene polymer block.

### [Weight average molecular weight of isoprene polymer block of block copolymer]

The weight average molecular weight of the isoprene polymer block was determined based on the calculated value obtained by subtracting the weight average molecular weight of the corresponding styrene polymer block from the weight average molecular weight of the block copolymer determined as described above.

### [Ratio ((Ar¹-D¹) /D²) of mass of chains as branches in block copolymer A1]

2 mL of the polymer solution before the coupling step was sampled, and was mixed with 1 mL of excess methanol to deactivate the polymerization activity. The resulting sample was analyzed by high performance liquid chromatography, and the ratio ((Ar¹-D¹) /D²) of the mass of chains as branches in the block copolymer A1 was determined from the area ratios of peaks in the obtained chart.

### [Ratio ((Mw(B¹))/(Mw(D²))) of weight average molecular weight of isoprene polymer block in block copolymer A1]

A sample taken before the coupling step was analyzed by high performance liquid chromatography in the same manner as above, and the weight average molecular weight of Ar¹-D¹ and that of D² were determined in the same manner as above. Thereafter, the ratio ((Mw(D¹))/(Mw(D²))) of the weight average molecular weight of the isoprene polymer block in the block copolymer A1 was determined by subtracting the weight average molecular weight of the styrene polymer block in the block copolymer A1 determined by the above-mentioned method.

### [Average number of branches of block copolymer A1]

The average number of branches of the block copolymer A1 was calculated from the weight average molecular weight of the block copolymer A1, that of Ar¹-D¹, that of D², and the ratio ((Ar¹-D¹)/D²) of the mass of chains as branches in the block copolymer A1, which were determined by the above-mentioned method.

### [Average number of branches of block copolymer A2]

A sample taken before the coupling step was analyzed by high performance liquid chromatography in the same manner as above, and the weight average molecular weight of Ar-D was determined in the same manner as above. Then, the average number of branches of the block copolymer A2 was calculated from the weight average molecular weight of the block copolymer A2 and that of Ar-D which were determined by the above-mentioned method.

### [Styrene unit content in entire block copolymer composition]

The styrene unit content was determined based on measurement by proton NMR.

### [Type A hardness of block copolymer composition]

The type A hardness was measured in accordance with JIS K6253 using a durometer hardness tester (type A).

### [Melt index of adhesive composition before and after biaxial extrusion processing]

An adhesive composition in the form of crumbs before biaxial extrusion processing and that in the form of pellets after biaxial extrusion processing were measured for melt index in accordance with ASTM D1238 (G condition, 200°C, load: 5 kg). It can be determined that a smaller change in melt index before and after the biaxial extrusion processing indicates more excellent processability of the adhesive composition.

### [Hot-melt processability]

10 g of a hot-melt adhesive composition was sampled, and was measured for melt viscosity (unit: mPa·s) at 180°C with a Thermosel type Brookfield viscometer using a rotor No. 27. Since a melt viscosity of 500,000 mPa·s or less indicates excellent hot-melt processability and easy production of an adhesive by hot-melt, the composition was evaluated as "A". On the other hand, since a melt viscosity of more than 500,000 mPa·s indicates poor hot-melt processability, the composition was evaluated as "B".

### [Adhesive residue test]

A hot-melt adhesive composition was hot-melt applied to a PET film (thickness: 25 µm) to have a thickness of 20 to 30 µm. Thus, a coated sheet was obtained. In the next step, the coated sheet was cut to obtain a test piece before cross-linking. The test piece before cross-linking thus obtained was bonded to a stainless steel plate by press bonding at 300 mm/min using a 2-kg rubber roller under a condition of 23°C, and the test piece after it was left at 100°C and 12 hours had passed from the bonding was used as a sample for measurement. In accordance with PSTC-1 (180° peel adhesion test by Pressure Sensitive Tape Council, US), using a high-speed peel tester "TE-701-S" available from TESTER SANGYO CO,. LTD. as a tester, the sample for measurement was peeled off at 23°C and a peel rate of 15 m/min to determine peel adhesion strength (N/m). In addition, the thermal stability of the hot-melt adhesive composition before cross-linking was evaluated by visually observing the stainless steel plate after peeling to verify the presence/absence of an adhesive residue.

The test piece before cross-linking was irradiated with ultraviolet light at 100 mJ/cm² under an UV-C lamp to cross-link the hot-melt adhesive composition. Thus, a test piece including an adhesive layer was obtained. Using the resulting test piece, the peel adhesion strength (N/m) of the adhesive after cross-linking was determined, and the thermal stability was evaluated. Specifically, the case where no adhesive residue was visually observed in the test piece was evaluated as "A", the case in which adhesive residues were observed in part of the test pieces was evaluated as "B", and the case where adhesive residues were visually observed across the test piece was evaluated as "C". It can be determined that a smaller amount of adhesive residues indicates more excellent thermal stability.

### [SAFT]

A hot-melt adhesive composition was hot-melt applied to a PET film (thickness: 25 µm) to have a thickness of 20 to 30 µm. Thus, a coated sheet was obtained. In the next step, the coated sheet was cut to obtain a test piece before cross-linking. The test piece before cross-linking thus obtained was brought into contact with an adherent made of stainless steel to form an adhesion portion of 10 × 25 mm, and was press bonded at a rate of 300 mm/min using a 2-kg rubber roller under a condition of 23°C. Thus, a sample for measurement was obtained. A load was applied to the sample for measurement using a weight of 500 g, and the shear adhesion failure temperature (SAFT) of the hot-melt adhesive composition before cross-linking was measured at a temperature raising rate of 0.5°C/min.

The test piece before cross-linking was irradiated with ultraviolet light at 100 mJ/cm² under an UV-C lamp to cross-link the hot-melt adhesive composition. Thus, a test piece including an adhesive layer was obtained. The resulting test piece was measured for shear adhesion failure temperature (SAFT) of the adhesive after cross-linking. It can be determined that a higher shear adhesion failure temperature (SAFT) indicates more excellent high-temperature adhesion performance (adhesiveness at a high temperature).

### [Loop tack]

A hot-melt adhesive composition was hot-melt applied to a PET film (thickness: 25 µm) to have a thickness of 20 to 30 µm. Thus, a coated sheet was obtained. In the next step, the coated sheet was cut to obtain a test piece before cross-linking. Using the test piece before cross-linking thus obtained and a stainless steel plate as an adherent, the loop tack (N/25 mm) of the hot-melt adhesive composition before cross-linking was evaluated with a tensile tester at a test rate of 300 mm/min and a temperature of 23°C with a bonded portion of 25 × 25 mm.

The test piece before cross-linking was irradiated with ultraviolet light at 100 mJ/cm² under an UV-C lamp to cross-link the hot-melt adhesive composition. Thus, a test piece including an adhesive layer was obtained. Using the resulting test piece, the loop tack of the adhesive after cross-linking was evaluated. A greater value indicates more excellent initial adhesiveness.

### [Cross-linkability]

A hot-melt adhesive composition was cross-linked into an adhesive by irradiation with light at 100 mJ/cm² under an UV-C lamp. In the next step, high performance liquid chromatography was performed on the hot-melt adhesive composition before cross-linking and the adhesive after cross-linking to evaluate the cross-linkability. Specifically, utilizing a phenomenon that the peak area derived from the block copolymer A1 or the block copolymer A2 decreases when the block copolymer A1 or block copolymer A2 before cross-linking had a high molecular weight as a result of cross-linking, the reduction ratio of the peak area derived from the block copolymer A1 or the block copolymer A2 before and after cross-linking was determined with respect to the peak area derived from the block copolymer A1 or the block copolymer A2 contained in the hot-melt adhesive composition before cross-linking. In the table, "> 90(%)" indicates that the reduction ratio of the peak area exceeds 90%. It can be determined that a larger reduction ratio of the peak area indicates more excellent cross-linkability.

### [Production Example 1]

Using a 2-liter pressure-resistant reactor, in which 400 g of a mixed solvent of n-butane and cyclohexane in a proportion of 30/70, 0.07 mmol of tetramethylethylenediamine, and 2.25 mmol of n-butyllithium as an initiator were present, 22 g of styrene was added, and was polymerized at 30°C for 1 hour. Subsequently, 78 g of isoprene was added, and was polymerized for about one and a half hours while the temperature was being controlled by reflux cooling such that the reaction temperature fell within the range from 50°C to 60°C. In the next step, divinylbenzene (DVB) as a coupling agent was added in an amount of 4-fold equivalent relative to the total amount of n-butyllithium, and a coupling reaction was performed for 2 hours. Thereafter, 1 ml of methanol as a polymerization terminator was added to the reaction mixture, giving a solution containing a block copolymer composition (1). Using the resulting solution, the block copolymer composition (1) in the solution was measured as described above. The results are shown in Table 1.

### [Production Example 2]

Using a 2-liter pressure-resistant reactor, in which 400 g of a mixed solvent of n-butane and cyclohexane in a proportion of 30/70, 0.07 mmol of tetramethylethylenediamine, and 1.75 mmol of n-butyllithium as an initiator were present, 22 g of styrene was added, and was polymerized at 30°C for 1 hour. Subsequently, 0.75 mmol of n-butyllithium and 78 g of isoprene were added, and polymerized for about one and a half hours while the temperature was being controlled by reflux cooling such that the reaction temperature fell within the range from 50°C to 60°C. In the next step, divinylbenzene (DVB) as a coupling agent was added in an amount of 4-fold equivalent relative to the total amount of n-butyllithium, and a coupling reaction was performed for 2 hours. Thereafter, 1 ml of methanol as a polymerization terminator was added to the reaction mixture, giving a solution containing a block copolymer composition (2). Using the resulting solution, the block copolymer composition (2) in the solution was measured as described above. The results are shown in Table 1.

### [Production Example 3]

Using a 2-liter pressure-resistant reactor, in which 400 g of a mixed solvent of n-butane and cyclohexane in a proportion of 30/70, 0.07 mmol of tetramethylethylenediamine, and 2 mmol of n-butyllithium as an initiator were present, 25 g of styrene was added, and was polymerized at 30°C for 1 hour. Subsequently, 75 g of isoprene was added, and was polymerized for about one and a half hours by reflux cooling while the reaction temperature fell within the range from 50°C to 60°C. In the next step, dichlorodimethylsilane (DMDCS) as a coupling agent was added in an amount of 0.375-fold equivalent relative to the total amount of n-butyllithium, and a coupling reaction was performed for 2 hours. Thereafter, 1 ml of methanol as a polymerization terminator was added to the reaction mixture, giving a solution containing a block copolymer composition (3). Using the resulting solution, the block copolymer composition (3) in the solution was measured as described above. The results are shown in Table 1.

### [Table 1]

**Table 1**

| | | Production Ex. 1 | Production Ex. 2 | Production Ex. 3 |
|---|---|---|---|---|
| Structure having three or more chains as branches | | Present | Present | Absent |
| Polymerization at 1st stage | | | | |
| | n-Butyllithium (mmol) | 2.25 | 1.75 | 2 |
| | Monomer | Styrene | Styrene | Styrene |
| | Amount added (g) | 22 | 22 | 25 |
| | Monomer | Isoprene | - | Isoprene |
| | Amount added (g) | 78 | - | 75 |

| Polymerization at 2nd stage | | | | |
|---|---|---|---|---|
| | n-Butyllithium (mmol) | - | 0.75 | - |
| | Monomer | - | Isoprene | - |
| | Amount added (g) | - | 78 | - |

| Coupling agent | | | | |
|---|---|---|---|---|
| | Type | DVB | DVB | DMDCS |
| | Amount added (coupling agent (mol)/total amount of n-butyllithium (mol)) | 4 | 4 | 0.375 |

| Physical properties of monomers | | | | |
|---|---|---|---|---|
| Block copolymer A1 or A2 | | | | |
| | Type | A2 | A1 | - |
| | Molecular weight distribution (Mw/Mn) | 1.1 | 1.1 | 1.01 |
| | Content (%) in composition | 93 | 95 | 75 |
| | (Ar¹-D¹)/D² (mass/mass) | - | 1.0/0.30 | - |
| | (Mw(D¹)/(Mw(D²)) | - | 1.0/1.0 | - |
| | Weight average molecular weight (Mw) ((×10^3) g/mol) | 514 | 452 | 150 |
| | Average number of branches | 7.3 | 6.5 | 2.0 |

| Block copolymer B | | | | |
|---|---|---|---|---|
| | Molecular weight distribution (Mw/Mn) | 1.01 | 1.01 | 1.01 |
| | Content (%) in composition | 5 | 4 | 25 |

| Polymer C | | | | |
|---|---|---|---|---|
| | Molecular weight distribution (Mw/Mn) | 1.01 | 1.01 | - |
| | Content (%) in composition | 2 | 1 | - |

| Block copolymer composition | | | | |
|---|---|---|---|---|
| | Total styrene content (%) | 22 | 22 | 25 |
| | Weight average molecular weight (Mw) ((×10^3) g/mol) | 504 | 433 | 131 |
| | Type A hardness | 48 | 47 | 52 |

In Examples and Comparative Examples, alkyl radical scavengers and antioxidants used are shown below.

### [Hindered phenol-based antioxidant]

· Irganox 1010: pentaerythritol tetrakis[3-[3,5-di(tert-butyl)-4-hydroxyphenyl]propionate], available from BASF SE
· Irganox 565: 4-[[4,6-bis(octylthio)-1,3,5-triazin-2-yl]amino]-2,6-di-tert-butylphenol, available from BASF SE

### [Phosphorus-based antioxidant]

· Irgafos 168: tris(2,4-di-tert-butylphenyl) phosphite, available from BASF SE

### [Alkyl radical scavenger]

· Sumilizer GM: 2-t-butyl-6-(3-t-butyl-2-hydroxy-5-methylbenzyl)-4-methylphenyl acrylate, available from Sumitomo Chemical Co., Ltd.
· Sumilizer GS: 2-[1-(2-hydroxy-3,5-di-t-pentylphenyl)ethyl]-4,6-dit-pentylphenyl acrylate, available from Sumitomo Chemical Co., Ltd.

### [Example 1-1]

To the solution containing the block copolymer composition (1) obtained in Production Example 1, 0.1 parts of Irganox 1010, 0.2 parts of Irgafos 168, and 0.2 parts of Sumilizer GM relative to 100 parts of the block copolymer composition (1) were added, and mixed well. The resulting mixed solution was added dropwise in small portions to hot water heated to 85 to 95°C to vaporize the solvent, and an adhesive composition in the form of crumbs was recovered. The resulting adhesive composition in the form of crumbs was placed into a twin screw kneading extruder, and was subjected to biaxial extrusion processing, giving the adhesive composition in the form of pellets. The configuration of the twin screw kneading extruder used and the conditions for biaxial extrusion processing are shown below.

### [Configuration of twin screw kneading extruder]

unidirectional rotation twin screw kneading extruder HK-25D (41D) (available from Parker Corporation)
φ25 mm, L/D = 41, the number of barrels = 7

### [Conditions for biaxial kneading extrusion]

barrel setting temperature: 180°C
resin temperature: 210°C
rotational speed (rpm): 100
feed rate (gravimetric feeder used): 5 kg/h

The adhesive composition in the form of crumbs before biaxial extrusion processing and the adhesive composition in the form of pellets after biaxial extrusion processing were measured for melt index as described above. The results are shown in Table 2.

### [[Examples 1-2 to 1-6, Comparative Examples 1-1 to 1-6]

Adhesive compositions in the form of crumbs and adhesive compositions in the form of pellets were obtained in the same manner as in Example 1-1 except that the solution obtained in any one of Production Examples 1 to 3 as shown in Table 2 was used as the solution containing the block copolymer composition and Irganox 1010, Irganox 565, Irgafos 168, Sumilizer GM, and Sumilizer GS were used in amounts relative to 100 parts of the block copolymer composition as shown in Table 2. The resulting adhesive compositions were measured as described in Example 1-1. The results are shown in Table 2.

### [Table 2]

**Table 2**

| | | | Example 1-1 | Example 1-2 | Example 1-3 | Example 1-4 | Example 1-5 | Example 1-6 | Comp. Ex. 1-1 | Comp. Ex. 1-2 | Comp. Ex. 1-3 | Comp. Ex. 1-4 | Comp. Ex. 1-5 | Comp. Ex. 1-6 |
|---|---|---|---|---|---|---|---|---|---|---|---|---|---|---|
| Block copolymer composition | | | | | | | | | | | | | | |
| | Block copolymer composition (1) | (parts) | 100 | 100 | 100 | 100 | | | 100 | 100 | 100 | | | |
| | Block copolymer composition (2) | (parts) | | | | | 100 | 100 | | | | 100 | | |
| | Block copolymer composition (3) | (parts) | | | | | | | | | | | 100 | 100 |

| Hindered phenol-based antioxidant | | | | | | | | | | | | | | |
|---|---|---|---|---|---|---|---|---|---|---|---|---|---|---|
| | Irganox 1010 | (parts) | 0.1 | | 0.1 | 0.3 | 0.1 | 0.1 | 0.1 | 0.3 | 0.1 | 0.1 | 0.1 | 0.1 |
| | Irganox 565 | (parts) | | 0.1 | | | | | | | | | | |

| Phosphorus-based antioxidant | | | | | | | | | | | | | | |
|---|---|---|---|---|---|---|---|---|---|---|---|---|---|---|
| | Irgafos 168 | (parts) | 0.2 | 0.2 | 0.2 | | 0.2 | 0.2 | 0.2 | 0.6 | 0.2 | 0.2 | 0.2 | 0.2 |
| Alkyl radical scavenger | | | | | | | | | | | | | | |
| | Sumilizer GM | (parts) | 0.2 | 0.5 | | 0.2 | 0.2 | | | | 5 | | 0.2 | |
| | Sumilizer GS | (parts) | | | 0.2 | | | 0.2 | | | | | | |

| Change in met index of adhesive composition before and after biaxial extrusion processing | | | | | | | | | | | | | | |
|---|---|---|---|---|---|---|---|---|---|---|---|---|---|---|
| | Met index before biaxial extrusion processing | (g/10 min) | 7 | 7 | 7 | 7 | 10 | 10 | 7 | 7 | 7 | 10 | 20 | 20 |
| | Melt index after biaxial extrusion processing | (g/10 min) | 6 | 7 | 6 | 6 | 9 | 9 | 1 | 1 | 7 | 1 | 20 | 20 |

### [Example 2-1]

The adhesive composition in the form of pellets obtained in Example 1-1 was placed into a stirring blade-type kneader, and 100 parts of a petroleum resin (aliphatic-aromatic copolymerized hydrocarbon resin, trade name "Quintone S195", available from ZEON Corporation), 10 parts of naphthenic process oil (trade name "SUNPURE N100", available from JAPAN SUN OIL COMPANY, LTD.) as a softener (plasticizer), 1 part of a cross-linking agent 1 (bis(2,4,6-trimethylbenzoyl)-phenyl phosphine oxide, Omnirad 819, available from IGM RESINS B.V.), 1 part of a cross-linking agent 2 (2-isopropylthioxanthone, 2-ITX, available from IGM RESINS B.V.), and 1 part of Irganox 1010 were added thereto relative to 100 parts of the block copolymer composition (1) in the adhesive composition. The inside of the system was purged with nitrogen gas, followed by kneading at 160°C for 1.5 hours to prepare a hot-melt adhesive composition.

The resulting hot-melt adhesive composition was tested and evaluated for hot-melt processability, adhesive residue, SAFT, loop tack, and cross-linkability. The results are shown in Table 3.

### [[Examples 2-2 to 2-6, Comparative Examples 2-1 to 2-6]

Hot-melt adhesive compositions were obtained in the same manner as in Example 2-1 except that the adhesive composition obtained in Example 1-1 was replaced by the adhesive composition obtained in Example or Comparative Example shown in Table 3. The resulting hot-melt adhesive compositions were measured as in Example 2-1. The results are shown in Table 3.

### [Table 3]

**Table 3**

| | | | Example 2-1 | Example 2-2 | Example 2-3 | Example 2-4 | Example 2-5 | Example 2-6 | Comp. Ex. 2-1 | Comp. Ex. 2-2 | Comp. Ex. 2-3 | Comp. Ex. 2-4 | Comp. Ex. 2-5 | Comp. Ex. 2-6 |
|---|---|---|---|---|---|---|---|---|---|---|---|---|---|---|
| Adhesive composition | | | | | | | | | | | | | | |
| | Example 1-1 | (parts) | 100 | | | | | | | | | | | |
| | Example 1-2 | (parts) | | 100 | | | | | | | | | | |
| | Example 1-3 | (parts) | | | 100 | | | | | | | | | |
| | Example 1-4 | (parts) | | | | 100 | | | | | | | | |
| | Example 1-5 | (parts) | | | | | 100 | | | | | | | |
| | Example 1-6 | (parts) | | | | | | 100 | | | | | | |
| | Comp. Ex. 1-1 | (parts) | | | | | | | 100 | | | | | |
| | Comp. Ex. 1-2 | (parts) | | | | | | | | 100 | | | | |
| | Comp. Ex. 1-3 | (parts) | | | | | | | | | 100 | | | |
| | Comp. Ex. 1-4 | (parts) | | | | | | | | | | 100 | | |
| | Comp. Ex. 1-5 | (parts) | | | | | | | | | | | 100 | |
| | Comp. Ex. 1-6 | (parts) | | | | | | | | | | | | 100 |
| Petroleum resin | | (parts) | 100 | 100 | 100 | 100 | 100 | 100 | 100 | 100 | 100 | 100 | 100 | 100 |
| Softener (plasticizer) | | (parts) | 10 | 10 | 10 | 10 | 10 | 10 | 10 | 10 | 10 | 10 | 10 | 10 |
| Cross-linking agent 1 | | (parts) | 1 | 1 | 1 | 1 | 1 | 1 | 1 | 1 | 1 | 1 | 1 | 1 |
| Cross-linking agent 2 | | (parts) | 1 | 1 | 1 | 1 | 1 | 1 | 1 | 1 | 1 | 1 | 1 | 1 |
| Irganox 1010 | | (parts) | 1 | 1 | 1 | 1 | 1 | 1 | 1 | 1 | 1 | 1 | 1 | 1 |

| Physical properties of hot-melt adhesive compostion (before cross-linking) | | | | | | | | | | | | | | |
|---|---|---|---|---|---|---|---|---|---|---|---|---|---|---|
| | Hot-melt processability | | A | A | A | A | A | A | B | B | A | B | A | A |
| | Adhesive residue test | | C | C | C | C | C | C | - - | - - | C | - - | C | C |
| | SAFT | (°C) | 99 | 99 | 99 | 99 | 97 | 97 | - | - | 124 | - | 101 | 101 |
| | Looptack | (N/25 mm) | 13.5 | 121 | 12.7 | 12 | 17 | 16.4 | - | - | 29 | - | 10.3 | 10.4 |
| | Cross-linkability (UV-C lamp, amount SIS lost during irradiation at 100mJ/cm2) of | (%) | >90 | >90 | >90 | >90 | >90 | >90 | - | - | 44 | - | 2 | 2 |

| Physical properties of adhesive (after cross-inking) | | | | | | | | | | | | | | |
|---|---|---|---|---|---|---|---|---|---|---|---|---|---|---|
| | Adhesive residue test | | A | A | A | A | A | A | - - | - - | B | - - | C | C |
| | SAFT | (°C) | 147 | 146 | 146 | 148 | 145 | 144 | - | - | 124 | - | 108 | 108 |
| | Looptack | (N/25 mm) | 9.5 | 8.4 | 9.6 | 8.9 | 15.4 | 16.7 | - | - | 24 | - | 9.5 | 9.6 |

Table 3 shows that when the adhesive compositions comprised the block copolymer composition containing the block copolymer A1 represented by General Formula (1) or the block copolymer A2 represented by General Formula (2) and the alkyl radical scavenger wherein the weight average molecular weight (Mw) of the entire block copolymer composition was 300,000 to 800,000, and the content of the alkyl radical scavenger was 0.05 to 2 parts by mass relative to 100 parts by mass of the content of the block copolymer composition, such adhesive compositions had excellent processability and provided adhesives having excellent adhesive properties (Examples 1-1 to 1-6 and 2-1 to 2-6).

In contrast, when the adhesive compositions comprised the block copolymer composition containing the block copolymer A1 or the block copolymer A2 but no alkyl radical scavenger, the change in melt index before biaxial extrusion processing was significant, the resulting hot-melt adhesive compositions had poor hot-melt processability, and the processability was reduced (Comparative Examples 1-1, 1-2, 1-4, 2-1, 2-2, and 2-4).

When the content of the alkyl radical scavenger was too large, the resulting adhesives had poor adhesive properties (Comparative Examples 1-3 and 2-3).

When the adhesive compositions comprised no block copolymer composition containing the block copolymer A1 or the block copolymer A2, irrespective of the presence/absence of the alkyl radical scavenger, the melt index before biaxial extrusion processing hardly changed, but the resulting adhesives had poor adhesive properties (Comparative Examples 1-5, 1-6, 2-5, and 2-6).

## Claims

1. An adhesive composition comprising a block copolymer composition and an alkyl radical scavenger, the block copolymer composition containing a block copolymer A1 represented by General Formula (1) below or a block copolymer A2 represented by General Formula (2) below,
wherein the entire block copolymer composition has a weight average molecular weight (Mw) of 300,000 to 800,000, and
the content of the alkyl radical scavenger is 0.05 to 2 parts by mass relative to 100 parts by mass of the content of the block copolymer composition:
(Ar¹-D¹)ₘX¹(D²)ₙ (1)
where in General Formula (1), Ar¹ represents an aromatic monovinyl polymer block, D¹ and D² each represent a conjugated diene polymer block, m is an integer of 1 or more, n is an integer of 1 or more, m+n is an integer of 3 or more, and X¹ represents a residue of a polyfunctional coupling agent;
(Ar-D)ₚX (2)
where in General Formula (2), Ar represents an aromatic monovinyl polymer block, D represents a conjugated diene polymer block, p is an integer of 3 or more, and X represents a residue of a polyfunctional coupling agent.

2. The adhesive composition according to claim 1, wherein the block copolymer A1 or the block copolymer A2 has a molecular weight distribution (Mw/Mn) of 1.40 or less, and
the total content of the block copolymer A1 and the block copolymer A2 in the block copolymer composition is 10% by mass or more.

3. The adhesive composition according to claim 1 or 2, wherein the block copolymer composition further contains a diblock copolymer B represented by General Formula (3) below or a polymer C represented by General Formula (4) below,
the diblock copolymer B or the polymer C has a molecular weight distribution (Mw/Mn) of 1.20 or less,
the total content of the diblock copolymer B and the polymer C in the block copolymer composition is 60% by mass or less,
the content of aromatic monovinyl monomer units in the block copolymer composition is 5 to 40% by mass, and
the type A hardness of the block copolymer composition measured in accordance with JIS K6253 using a durometer hardness tester (type A) is 25 to 65:
Ar³-D³ (3)
D⁴ (4)
where in General Formulae (3) and (4), Ar³ represents an aromatic monovinyl polymer block, and D³ and D⁴ each represent a conjugated diene polymer block.

4. The adhesive composition according to any one of claims 1 to 3, wherein the melt index measured in accordance with ASTM D1238 (G condition, 200°C, load: 5 kg) is 1.5 to 50 g/10 min.

5. The adhesive composition according to any one of claims 1 to 4, wherein the block copolymer composition contains the block copolymer A1, and
in the block copolymer A1, the ratio ((Ar¹-D¹)/D²) of the mass of the chain as a branch represented by Ar¹-D¹ to the mass of the chain as a branch represented by D² is 1.0/0.15 to 1.0/1.75.

6. The adhesive composition according to any one of claims 1 to 5, wherein the block copolymer composition contains the block copolymer A1, and
in the block copolymer A1, the ratio ((Mw(D¹))(Mw(D²))) of the weight average molecular weight (Mw(B¹)) of the conjugated diene polymer block D¹ in the chain as a branch represented by Ar¹-D¹ to the weight average molecular weight (Mw(D²)) of the chain as a branch represented by D² is 1.0/0.3 to 1.0/1.1.

7. The adhesive composition according to any one of claims 1 to 6, wherein the polyfunctional coupling agent is a compound having two or more radical polymerizable groups in the molecule.

8. The adhesive composition according to claim 7, wherein the polyfunctional coupling agent is divinylbenzene.

9. The adhesive composition according to any one of claims 1 to 8, wherein the conjugated diene polymer block is an isoprene polymer block.

10. The adhesive composition according to any one of claims 1 to 9, wherein the alkyl radical scavenger is at least one selected from the group consisting of 2-[1-(2-hydroxy-3,5-di-t-pentylphenyl)ethyl]-4,6-di-t-pentylphenyl acrylate and 2-t-butyl-6-(3-t-butyl-2-hydroxy-5-methylbenzyl)-4-methylphenyl acrylate.

11. The adhesive composition according to any one of claims 1 to 10, further comprising at least one antioxidant selected from the group consisting of hindered phenol-based antioxidants, phosphorus-based antioxidants, sulfur-based antioxidants, and benzofuranone-based antioxidants,
wherein the content of the antioxidant is 0.01 to 10 parts by mass relative to 100 parts by mass of the content of the block copolymer composition.

12. A hot-melt adhesive composition comprising the adhesive composition according to any one of claims 1 to 11, a tackifying resin, and a cross-linking agent,
wherein relative to 100 parts by mass of the content of the block copolymer composition in the adhesive composition, the content of the tackifying resin is 10 to 400 parts by mass, and the content of the cross-linking agent is 0.01 to 50 parts by mass.

13. The hot-melt adhesive composition according to claim 12, further comprising a plasticizer in an amount of 0 to 200 parts by mass relative to 100 parts by mass of the content of the block copolymer composition in the adhesive composition.

14. An adhesive comprising the hot-melt adhesive composition according to claim 12 or 13,
wherein the adhesive is obtained by cross-linking the block copolymer A1 or the block copolymer A2 in the hot-melt adhesive composition.
